(19) Europäisches Patentamt
European Patent Office
Office européen des brevets

(11) **EP 1 744 472 B1**

(12) **EUROPEAN PATENT SPECIFICATION**

(45) Date of publication and mention
of the grant of the patent:
**13.06.2012 Bulletin 2012/24**

(51) Int Cl.:
**H04W 56/00** *(2009.01)*

(21) Application number: **05015250.3**

(22) Date of filing: **13.07.2005**

(54) **Apparatus and method for synchronizing a first transmit and receive device to a second transmit and receive device**

Vorrichtung und Verfahren zur Synchronisation eines ersten Sende- und Empfangsgeräts mit einem zweiten Sende- und Empfangsgerät

Dispositif et Procédé de synchronisation d'un premiere dispositif d'émission et de réception à un deuxième dispositif d'émission et de réception

(84) Designated Contracting States:
**DE GB**

(43) Date of publication of application:
**17.01.2007 Bulletin 2007/03**

(73) Proprietor: **NTT DoCoMo, Inc.**
**Tokyo (JP)**

(72) Inventors:
• **Tyrrell, Alexander**
**85356 Freising (DE)**
• **Auer, Gunther**
**80339 Munich (DE)**
• **Bettstetter, Christian**
**80687 Munich (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**EP-A- 1 416 648    WO-A-01/99330**

• **YAO-WIN HONG ET AL: "Time synchronization and reach-back communications with pulse-coupled oscillators for UWB wireless ad hoc networks" ULTRA WIDEBAND SYSTEMS AND TECHNOLOGIES, 2003 IEEE CONFERENCE ON NOV. 16-19, 2003, PISCATAWAY, NJ, USA,IEEE, 16 November 2003 (2003-11-16), pages 190-194, XP010683755 ISBN: 0-7803-8187-4**

**Description**

The present invention is in the field of network synchronization and in particular, in the field of self-organized network synchronization.

Decentralized networks, unlike centralized networks, comprise no global coordination unit to manage the synchronization and behaviour of the terminals. Decentralized networks or self-organizing network approaches are for example used to establish ad-hoc networks. Synchronization is defined in the sense of aligning local timing units, such that all nodes adhere to one common time scale. To this end, the synchronization defines a global slot structure, in the way that the beginning and end of a time slot are global parameters. Synchronization is necessary, for instance, to deploy a time slotted MAC (Medium Access Control) protocol.

Interesting examples of spontaneous, self-organizing synchronization can be found in nature. Male fireflies, which are mainly found in certain parts of southeast Asia gather at night on trees along riverside banks, and synchronize their blinking in order to get the attention of female fireflies, as described in "Coupled oscillators and biological synchronization," by S. H. Strogatz and I. Stewart, Scientific American, vol. 269, pp. 68-74, December 1993, in the following [1], and "Spontaneous synchronization in nature" by S. H. Strogatz, IEEE International Frequency Control Symposium, 1997, in the following [2]. This leads to impressive swarms of fireflies, all blinking in synchrony.

A mathematical approach to describe such synchronisations is based on the concept of "pulse-coupled oscillators". This term refers to systems that oscillate periodically in time and interact each time they complete an oscillation. This interaction takes the form of a pulse that is perceived by neighboring oscillators. These systems are known to show different behaviors ranging from perfect synchrony to pattern formation, as described in "Synchronization, diversity, and topology of networks of integrate and fire oscillators," by M. L. X. Guardiola, A. Diaz-Guilera and C. J. Perez, Phys. Rev. E, vol. 62, pp. 5565-5570, April 2000, in the following [5].

In the following it will be described how time synchronization is achieved between pulse-coupled oscillators. First, a mathematical model will be associated to these oscillators. Then it will be examined how two pulse-coupled oscillators can synchronize to pulse as one.

As a simple mathematical model or representation, a pulse-coupled oscillator is described only by its phase function. This function evolves linearly over time until it reaches a threshold value $\Phi_{threshold}$. When this happens, the oscillator fires, and resets its phase. Thus, if not coupled with any other oscillator, it will fire with a period equal to T, in the following referred to as the phase function period T.

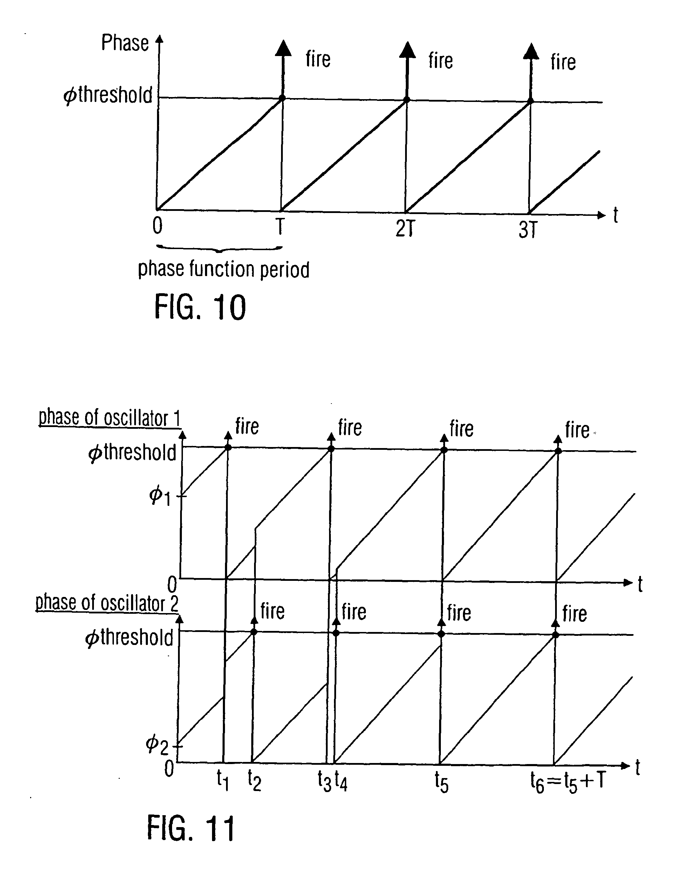

Due to the evolution of this function, these oscillators are also referred to as integrate-and-fire oscillators. Fig. 10 shows the evolution of the phase function of an isolated oscillator.

This model approximates the behavior of a biological pulse-coupled oscillator. The firing instant corresponds to an emission of light for a firefly or to an electrical impulse for a neuron. In the following one will see how such oscillators are able to synchronize by modifying their phase function when receiving a pulse.

Based only on the phase function described previously, two identical oscillators are able to synchronize their firing instant within a few periods. To achieve this, an oscillator modifies its phase when receiving a pulse from another integrate-and-fire oscillator.

Fig. 11 shows how two oscillators can synchronize using this scheme. At instant 0, the oscillators are not synchronized. Their initial phases, $\Phi_1$ and $\Phi_2$, are randomly distributed between 0 and $\Phi_{threshold}$. At this time, each oscillator increments its phase linearly over time until one of them reaches $\Phi_{threshold}$. At $t_1$, oscillator 1 is the first to reach the threshold. It fires a pulse and resets its phase. As the oscillators are coupled, oscillator 2 will then increment its own phase. The increment is determined by the Phase Return Curve (PRC) $\Delta(\Phi)$. Comments on this function will be made later. At $t_2$, oscillator 2 fires, and oscillator 1 increases its phase accordingly. This scheme goes on until $t_5$ where the firing of oscillator 1 causes oscillator 2 to fire at the same instant. At this time, both oscillators are synchronized. At $t_6 = t_5 + T$, they fire at the same instant.

If an oscillator is isolated, its phase $\Phi$ will increment linearly over time. If coupled to other oscillators, it is then receptive to the pulses of its neighbors. When receiving such a pulse, it will instantly increment its phase by an amount that depends on the current value, $\Delta(\Phi)$ being the phase increment:

$$\Phi \rightarrow \Phi + \Delta(\Phi) \text{ when receiving a pulse.}$$

As shown in "Synchronization of pulse-coupled biological oscillators," by Mirollo and Strogatz, SIAM J. APPL. MATH, vol. 50, pp. 1645-1662, December 1990, in the following [3], this simple type of interaction leads to synchronization whatever the initial conditions are. To do so, the increment $\Delta(\Phi)$ needs to be chosen based on a function $f(\Phi)$, where $f(\Phi)$ needs to be concave down for the oscillators to synchronize [3]. The chosen function is

$$f(\phi) = \frac{1}{b}\ln(1+[e^{b}-1]\phi) \tag{1}$$

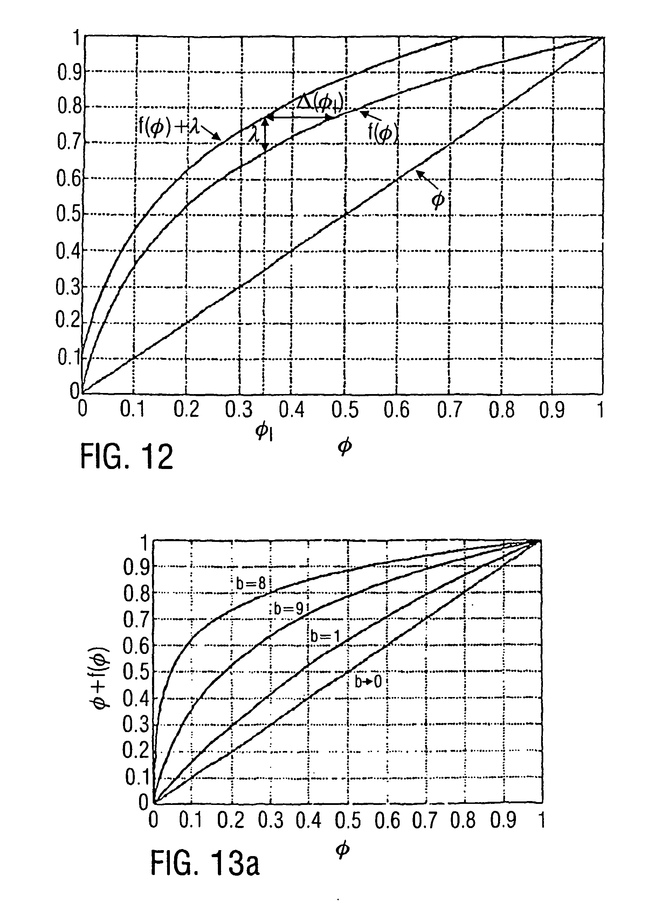

For each oscillator, the function f plays the role of an amplitude. When an oscillator receives a pulse, it raises its amplitude by an amount $\lambda$, $\lambda > 0$. This is equivalent to an increase in phase $\Delta(\Phi)$. Fig. 12 shows how the phase increment $\Delta(\Phi)$ is obtained from the phase response curve for b=3 and $\lambda$=0.1 ($\Phi_{threshold}$ = 1 in this case).

$\Delta(\Phi)$ can be written analytically by the following expression:

$$\phi + \Delta(\phi) = f^{-1}(\min[f(\phi)+\lambda, \phi_{threshold}]) \tag{2}$$

The function f is parameterized by b, where b > 0 for the function to be concave down. The higher b is, the more concave f($\Phi$) is (the steeper f($\Phi$) is when $\Phi$ is small and flatter when $\Phi$ is close to $\Phi_{threshold}$). Fig. 13a plots this function or the phase response curve according to equation (1) for a few values of b ($\Phi_{threshold}$ = 1 in this case).

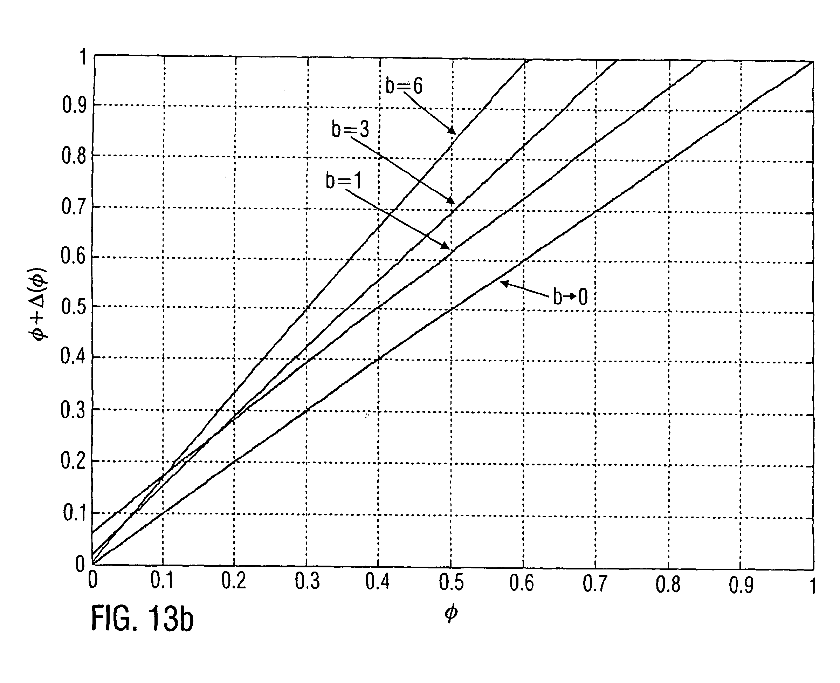

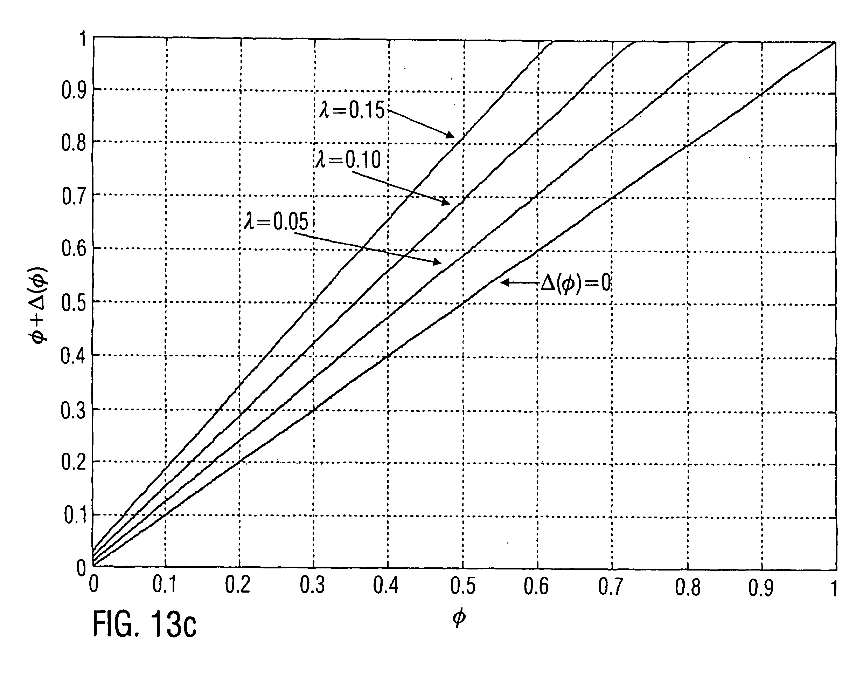

From Fig. 12 it is difficult to see how $\Delta(\Phi)$ evolves as a function of $\Phi$ and the dependency on b or $\lambda$. Fig. 13b plots + $\Delta(\Phi)$ for several values of b, whereas Fig. 13c plots $\Phi$ + $\Delta(\Phi)$ for several values of $\lambda$.

The model explained before describes the simplest mathematical interpretation of pulse-coupled oscillators that leads to synchrony. However, in a wireless environment, this simple model cannot always be directly applied. In the following the issues and wireless effects that occur when considering an application to wireless networks is explained.

The work done by Mirollo and Strogatz, [3], assumes that the coupling between oscillators is uniform and that each node is linked to all the others, i.e. the network is fully meshed. These assumptions are fair in a wireless network when considering a relatively small area.

This model also assumes that there is no delay between transmitting and listening and that a node can receive and transmit simultaneously. As soon as an oscillator fires, all neighbors instantly increment their phases, and may fire immediately. Also the length of the pulse is considered infinitely small, and there is no decoding done by the receiver.

To maintain stability for non-zero propagation delays, $T_{propagation}$, a refractory delay, in the following referred to as sleeping time $T_{sleep}$, is inserted after transmission is completed. The sleeping time $T_{sleep}$ prevents the so called avalanche effect. While the avalanche effect is speeding up synchronization for $T_{propagation}$ = 0, the system becomes unstable for $T_{propagation}$ > 0, as described in "Time synchronization and reach-back communications with pulse-coupled oscillators for UWB [Ultra Wideband] wireless ad hoc networks," by Y.-W. Hong and A. Scaglione, in IEEE Conference on Ultra Wideband Systems and Technologies 2003, pp. 190-194, November 2003, in the following [4].

From these observations, the wireless effects or four delays need to be taken into account to verify the robustness of the synchronization scheme: a propagation delay $T_{propagation}$, a time taken for a pulse to propagate from the emitting to the receiving node, this time is proportional to the distance between the two nodes, a transmitting delay $T_{transmit}$, a length of the pulse, a decoding delay $T_{decode}$, a time taken by the receiver to decode a pulse and a refractory delay $T_{sleep}$, a time where a receiver is shut-off after transmitting. From these delays, the time during which a node is able to listen to other nodes is reduced from the ideal period when synchronized, here equaling the period of the phase function, T, by the transmitting and sleeping delays. The listening time is therefore defined by

$$T_{listen} = T - (T_{transmit} + T_{sleep})$$

For simulation purposes, it is interesting to model the oscillators with delays by a finite state machine (FSM), describing the state of a node.

Considering an evolution of a single Node, the state machine of the basic model would be very simple. It would simply be two states, a listening one and a transmitting one. A node would go to transmitting state when $\Phi$ reaches $\Phi_{threshold}$, and it would go back to the listening state immediately.

In the context of wireless networks, the "firing" instant accounts for transmitting a synchronization burst. The duration of the synchronization burst has been neglected previously. However, its duration may in fact be significant, denoted by $T_{transmit}$. To model the transmitting delay, the time spent in the transmitting state is simply made equal to $T_{transmit}$.

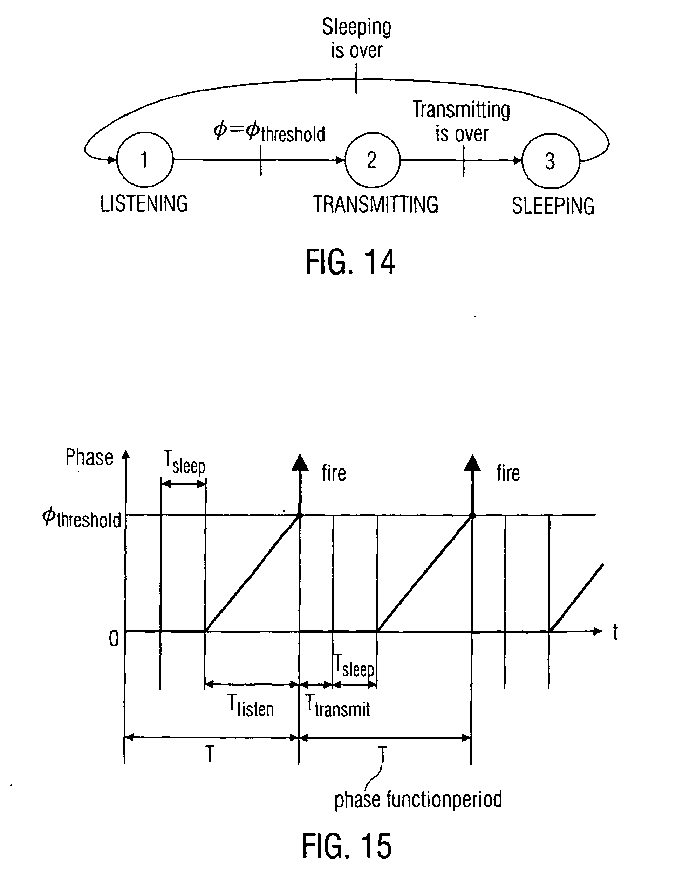

To model the refractory delay, one needs to introduce an additional state. After firing, a node cannot receive immediately during a certain amount of time. As a node cannot receive nor transmit during this period, it can also be seen as a sleeping period. The time spent in this state is proportional to $T_{sleep}$ or identical to $T_{sleep}$. Fig. 14 describes

the state machine of one node used to simulate these delays. These delays modify the original phase function that is plotted in Fig. 10. Fig. 15 updates the phase function of an isolated node by incorporating delays. As a convention, the phase of an oscillator is set to zero as soon as an oscillator fires. It only starts to linearly increment during $T_{listen}$, which is equal to $T - (T_{transmit} + T_{sleep})$.

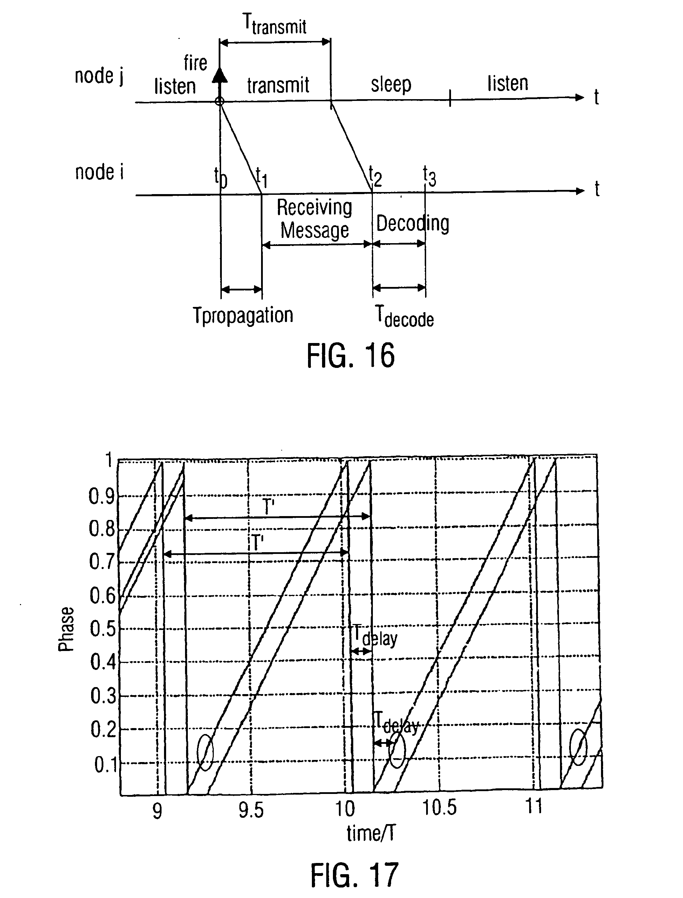

To describe the interaction between two nodes, a simplification can be made by studying the point of view of one node, node i, when another node is firing, node j. Fig. 16 plots the different cases that need to be taken into account to build the state machine describing the point of view of node i when node j is firing. From Fig. 16, there are four time different intervals that need to be studied (before to, $(t_0,t_1]$, $[t_1,t_2]$, and $[t_2,t_3]$). During each of these intervals, node i can be in either of the states shown in Fig. 14. Hence the complete state machine describing the point of view of node i should require 12 states. However, one is only interested to know how node i is able to completely receive and decode the synchronization burst from node j. Therefore some states will be grouped to form an "Unable to Receive" state, while the states that lead to the successful recovery of the synchronization message will all be described.

Before to and after $t_3$, node i is waiting for a message from node j. During this time, node i can be in either state (Listening, Transmitting or Sleeping).

Instant to marks the instant when node j fires. For node i, this has no direct incidence. Therefore node i can be in either state.

Instant $t_1$ marks the instant when the message fired by node j reaches node i. At that instant, node i needs to be into listening state to be able to receive the synchronization burst. If between $t_1$ and $t_2$, node i fires, then it will not be able to receive the synchronization message from node j.

Instant $t_2$ marks the instant when the message has been completely received by node i. It now needs to be decoded. If between $t_2$ and $t_3$, node i fires, then it will not successfully decode the synchronization message. Once the decoding is over, node i can increment its phase by $\Delta(\Phi)$.

As the synchronization in any wireless system is limited by the propagation delay, this section will study and simulate the effects of transmitting, decoding and sleeping delays. To do so; the considered area is taken to be small, so that the propagation delay can be neglected.

The following settings are used for the following simulations: $T_{sampling} = 0.5\ \mu s$, $T = 100\mu s = 200\ T_{sampling}$ and $N = 30$ nodes.

First it is interesting to verify if the system is still able to synchronize despite of the delays that were introduced. Fig. 17 with Transmit = $10\mu s$, $T_{sleep} = 0{,}5\mu s$, $T_{decode} = 1\mu s$ and b = 0,2, plots the resulting phases of N nodes after 10 T. $T_{sleep}$ is to be taken to be as small as possible (1 sampling period).

The system does synchronize, but, interestingly, two groups of oscillators form, and their phases are shifted by $T_{delay}$, where $T_{delay} = T_{transmit} + T_{decode}$. This can be explained by the fact that when the first group fires, the nodes who are receiving at this time will increment their phases only $T_{delay}$ seconds after the first group. In return, the latter nodes will also fire. This is circled in Fig. 17. This increment occurs $T_{delay}$ after the second group fires, and it will affect the first group. However, as b is relatively small, the increment is almost negligible. It will, however, slightly increase the phase. As a consequence, the oscillator will fire sooner than expected. The new period is defined as T' (T' < T).

The system seems to be stable only because when the first group receives and decodes the synchronization message from the second group, its phases are very small. And as b is not too strong, the increment is relatively insignificant.

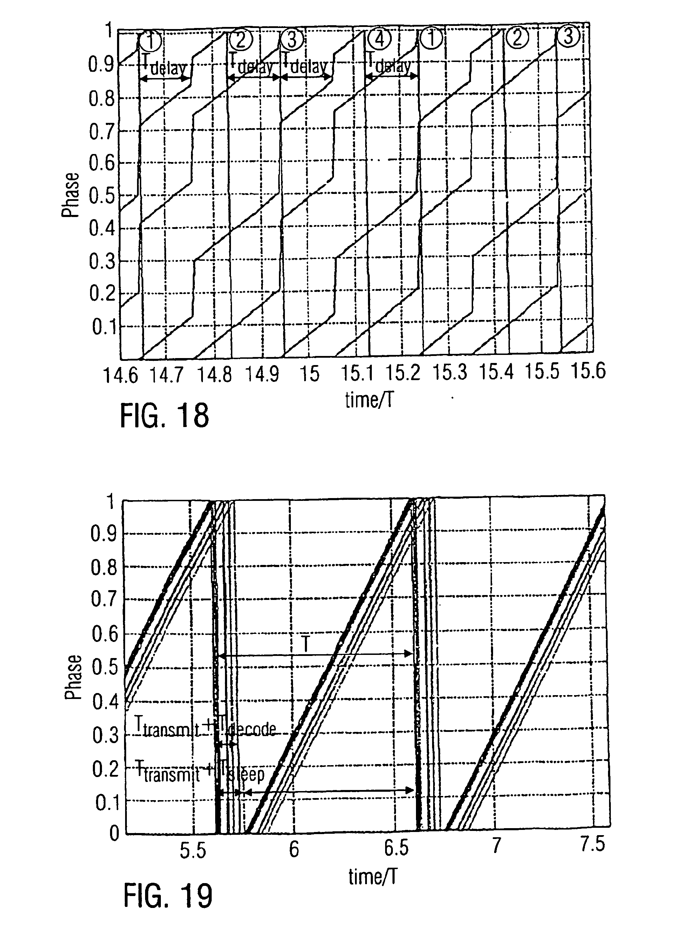

Fig. 18 plots the phases of the N nodes with the same settings as Fig. 17, Transmit = $10\mu s$, $T_{sleep} = 0{,}5\mu s$, $T_{decode} = 1\mu s$, except that b = 2. Once again, the system does synchronize, but four distinct groups form in this case. Generally, it has been observed that with these settings, depending on the number of nodes, N, and the coupling factor, b, three or more groups form. $T_{delay}$ is responsible for the formation of these groups. When Group 1 fires, it causes Group 2 to almost fire. After incrementing its phase, Group 2 fires, which causes Group 3 to fire, which then almost causes Group 4 to fire, which causes Group 1 to fire. And so on. The system that forms is stable over time.

To counter this effect, an oscillator should not be able to listen the echo of its own fire. This translates to a higher sleeping time. The time during which the firing oscillator cannot listen after firing needs to be at least higher than the time it takes for the receiving oscillator to completely receive the burst and fire a new one immediately. Therefore $T_{transmit} + T_{sleep}$ needs to be at least higher than $T_{transmit} + T_{decode}$.

This leads to the following condition

$$T_{sleep} > T_{decode}.$$

This condition assumes that the received synchronization burst will lead receivers to fire immediately. As seen in Fig. 11, this is not always the case. Therefore $T_{sleep}$ should be taken higher than the strict condition. As a rule of thumb,

$$T_{sleep} > 2 \cdot T_{decode}.$$

The following simulation, Fig. 19 with $T_{transmit} = 10\mu s$, $T_{sleep} = 4\mu s$, $T_{decode} = 1\mu s$ and b = 2, was done with $T_{sleep}$ being the only parameter that changed. Global synchronization is recovered thanks to the modification of $T_{sleep}$. This is an improvement. However, as it can be seen on Fig. 19, the oscillators fire within a time interval that is equal to $T_{delay}$. Therefore the accuracy of the synchronization is limited by

$$T_{delay} = T_{transmit} + T_{decode}.$$

Looking at the prior art it can be summarized, that Mirollo and Strogatz [3] analyzed spontaneous synchronization phenomena and also derived a theoretical framework for the convergence of synchrony. However in a wireless environment, the simple model of [3] cannot always be directly applied. Reference [3] assumes that there is no delay between transmitting and listening and that a node can receive and transmit simultaneously. As soon as an oscillator fires, all neighbors instantly increment their phases, and may fire immediately. Also the length of the pulse is considered infinitely small, and there is no decoding done by the receiver. Finally the time for an oscillator to switch from listening to transmitting and then back is also neglected.

Hong and Scaglione [4] applied the theoretical framework of [3] to wireless sensor networks. In their work the synchronization protocol was modified to better model a wireless communication system. However, the synchronization protocol of [4] still assumes infinitely short pulses. A wireless transmitter may not directly transmit a pulse, a sequence or burst is transmitted with duration $T_{transmit}$, significantly exceeding the duration of one sample or pulse, denoted by $T_{sampling}$. For many practical wireless networks, such as wireless LANs, GSM or UMTS, the synchronization burst has a duration of several tens to a few hundred sampling instants $T_{sampling}$. In fact, most synchronization approaches in wireless communications rely on relatively long sequences.

The receiver then collects the impinging signal, for example by a matched filter or correlation detector, which after successful reception will result in a correlation peak. While this correlation peak may be interpreted as a pulse similar to a synchronization pulse, there is an inherent delay of $T_{transmit} \gg T_{sampling}$, between the beginning of the transmission of a synchronization burst and its successful reception (neglecting possible propagation delays for the moment). It was shown that with the solution of [4] the synchronization accuracy cannot be better than $T_{transmit}$. If considering a short range network with a short transmitting pulse, such as UWB systems, the attained accuracy would be sufficient, as $T_{transmit}$ would be negligible [4]. Unfortunately, for many transmission techniques, such as DS-CDMA or OFDM, where the time for one symbol block or synchronization burst, $T_{transmit}$, is up to several hundreds to a few thousands times longer than $T_{sampling}$, such an accuracy is clearly unacceptable.

Therefore, it is the object of the present invention to provide a concept for a decentralized, self-organizing network synchronization with improved accuracy.

This object is achieved by an apparatus according to claim 1, a method for synchronizing a first transmit or receive device to a second transmit or receive device according to claim 12, a computer program according to claim 13 and a transmit or receive device according to claim 14.

The present invention provides an apparatus for synchronizing a first transmit or receive device to a second transmit or receive device comprising: a receiver implemented to receive a synchronization signal from the second transmit or receive device, a transmitter implemented to transmit a synchronization signal which after a synchronization time is in synchrony with the synchronization signal from the second transmit or receive device, a processing unit implemented to increase an internal signal value according to a given first function over time, to modify the internal signal value upon receiving a detection signal according to a given second function and to compare the internal signal value with a given threshold value when the apparatus is in a first control state, wherein the processing unit is further implemented to control the receiver to be ready to receive the synchronization signal from the second transmit or receive device in the first control state, to control the transmitter to wait a waiting time, the waiting time being greater then zero and smaller than a period of a first function, in a second control state, which is reached, when the internal signal value is equal to the threshold value, wherein the period of the first function is the period between two synchronization signals of a transmit or receive device, and to control the transmitter to transmit the synchronization signal in a third control state, which begins, when the waiting time is over.

Furthermore, the present invention provides a method for synchronizing a first transmit or receive device to a second transmit or receive device comprising the following steps: increasing an internal signal value according to a given first function over time being in a first control state, receiving and decoding a synchronization signal from a second transmit or receive device and modifying the internal signal value according to a second function being in a first control state, comparing the internal signal value with a threshold value being in a first control state and changing to a second control state when the internal signal value equals the threshold value, waiting a waiting time, the waiting time being greater than zero and smaller than a period of the first function in the second control state, wherein the period of the first function is the period between two synchronization signals of the transmit or receive device, and changing to a third control state, and transmitting the synchronization signal being in the third control state.

Additionally, the present invention provides a computer program having a program code for performing the inventive method for synchronizing a first transmit or receive device to a second transmit or receive device when the program runs on a computer.

The present invention is based on the finding that an improvement of the accuracy of the synchronization can be realized by introducing an additional control state, in the following referred to as waiting state or second control state, to delay the transmission of the synchronization signal and thus to delay the echo of the own transmission. Thereby the effect caused by a delay leading to a limited synchronization accuracy is reduced.

Thus, it is an advantage of the present invention that the accuracy for synchronizing a first transmit or receive device to a second transmit or receive device can be improved below $T_{delay}$, which is the synchronization accuracy limit without the waiting state when only a sleeping time after a transmission of the synchronization signal is present. This improved accuracy is obtained without any global synchronization unit. In an preferred embodiment of the present invention the waiting time $T_{wait}$ of the second control state is determined by a predetermined synchronized signal period $T_{sync}$, a synchronization signal length $T_{transmit}$ and a decoding time $T_{decode}$, wherein the synchronized signal period $T_{sync}$ is a predefined minimum time interval being greater than zero between two synchronization signals of distinct transmit or receiver devices in a synchronized state.

In an especially preferred embodiment of the invention, a waiting time $T_{wait}$ equals the synchronized signal period $T_{sync}$ or an positive integer multiple L of the synchronized signal period $T_{sync}$ reduced by the delay $T_{delay}$, thus taking into account the time span which is needed for transmitting and decoding by the receiver of an apparatus. This corresponds to a timing advance strategy, which ensures in an synchronized state, that other apparatus have received and decoded the synchronization signal exactly at that point of time, when their internal signal value equals the threshold value, i.e., after the period of the first function.

Taking into account certain conditions, which will be explained later, the accuracy of the synchronization can be improved up to a sample duration $T_{sampling}$ and thus providing a possibility to synchronize a first transmit or receive device to a second transmit or receive device, or in other words built a self-organized or decentralized network, such that all devices adhere to one common time scale, i.e., to define a global time slot structure, in the way that the beginning and the end of a time slot are global parameters. The important advantage of the invention is, that unlike to the state of the art the accuracy of the synchronization is not limited any more by the delay time $T_{delay}$. Thus, the invention can for example also be used for wireless networks, such as wireless LANs, GSM or UMTS, where the synchronization signal length $T_{transmit}$ has a duration of several tenths to a view hundred sampling durations $T_{sampling}$.

Depending on the chosen parameter values, e.g., L, $T_{sync}$, two or more groups of apparatus or devices can be formed in a synchronized state in a way, that each group transmits a synchronization signal with a period of the first function T but all groups considered as unity "seem" to transmit a synchronizations signal with a period of $T_{sync}$. Thus in an embodiment, in which for L = 1 for example two groups of apparatus or devices form, the synchronization period $T_{sync}$ defines the predetermined interval in a synchronized state between an instant a first group of apparatus transmits the synchronization signal and the instant a second group of apparatus transmits the synchronization signal, whereas T describes the period of the phase function and thus the interval between two synchronization signals of one group or one single apparatus, whereby the following equation is fulfilled: $T = 2 \cdot T_{sync}$.

With the novel wait and timing advance strategy synchronization of a self organized wireless network can be assured even if the transmitting time $T_{transmit}$ is 50% of the entire frame or burst period or synchronized signal period $T_{sync}$. This is a significant improvement with respect to the prior art [4], where the attainable synchronization accuracy cannot exceed $T_{transmit}$, i.e. if $T_{transmit} = T_{sync}/2 = T/2$ as described for the prior art example, the synchronization accuracy cannot be better than T/2.

Preferred embodiments of the present invention are described in detail with respect to the following figures, in which:

Fig. 1      shows an exemplary block diagram of an inventive apparatus;

Fig. 2      shows a state machine describing the state of an inventive apparatus or inventive oscillator;

Fig. 3      shows a diagram of a timing advance transmit strategy for two periods;

Fig. 4      shows a diagram of an internal signal value of 30 inventive nodes in synchronized state according to the time advance transmitting strategy with $T_{sync} = 1010\mu s$, $T_{transmit} = 20\mu s$, $T_{sleep} = 40\mu s$ and $T_{decode} = 10\mu s$;

Fig. 5 shows a diagram of the internal signal values of 30 inventive nodes with the time advanced transmitting strategy during synchronization with $T_{sync}$ = 100μs, $T_{transmit}$ = 35μs, $T_{sleep}$ = 20μs and $T_{decode}$ = 35μs;

Fig. 6 shows a diagram of the internal signal values of 30 nodes forming three groups in synchronization with $T_{sync}$ = 100μs, $T_{transmit}$ = 20μs, $T_{sleep}$ = 5μs and $T_{decode}$ = 35μs;

Fig. 7 shows a diagram of the internal signal values of 30 nodes without achieving synchronization with $T_{sync}$ = 100μs, $T_{transmit}$ = 35μs, $T_{sleep}$ = 60μs and $T_{decode}$ = 35μs;

Fig. 8 shows a diagram of exemplary stability limits of 30 inventive nodes with $T_{sync}$ = 100μs, $T_{decode}$ = 35μs and b = 3;

Fig. 9 shows a diagram of an exemplary synchronization rate of 30 inventive nodes with $T_{sync}$ = 100μs, $T_{decode}$ = 35μs, $T_{transmit}$ = 0.5μs and b = 3;

Fig. 10 shows a diagram of a phase of an isolated node without delay;

Fig. 11 shows the diagrams of the phases of two pulse-coupled oscillators during synchronization;

Fig. 12 shows a diagram of a possible phase response curve or second function and a phase increment;

Fig. 13a shows a diagram of possible graphs of a phase response curve or second function;

Fig. 13b shows a diagram of $\Phi + \Delta(\Phi)$ for several values of b;

Fig. 13c shows a diagram of $\Phi + \Delta(\Phi)$ for several values of $\lambda$;

Fig. 14 shows an exemplary diagram of a state machine describing the state of a node according to prior art;

Fig. 15 shows a diagram of a possible phase function of an isolated oscillator with delays;

Fig. 16 shows a diagram of the control states describing the point of view of a node i when a node j is firing;

Fig. 17 shows a diagram of the internal signal values of 30 prior art nodes with $T_{sync}$ = 100μs, $T_{sleep}$ = 0.5μs, $T_{decode}$ = 1μs and b = 0.2;

Fig. 18 shows a diagram of the internal signal values of 30 prior art oscillators with $T_{sync}$ = 100μs, $T_{transmit}$ = 10μs, $T_{sleep}$ = 0.5μs, $T_{decode}$ = 1μs and b = 2; and

Fig. 19 shows a diagram of the internal signal values of 30 prior art oscillators with $T_{sync}$ = 100μs, $T_{transmit}$ = 10μs, $T_{sleep}$ = 4μs, $T_{decode}$ = 1μs and b = 2.

Before preferred embodiments of the present invention are described in detail, the following corresponding terms are introduced. The inventive apparatus is also called a pulse-coupled oscillator or integrate-and-fire oscillator, with a phase $\Phi$ as the internal signal value, $\Phi_{threshold}$ as the threshold value, the phase function as the first function and the phase response curve $\Delta(\Phi)$ as the second function. A listening state is called the first control state, a waiting state is called the second state, a transmitting state is called the third state and a sleeping state is called the fourth state. The term node refers to an inventive oscillator or generally to an inventive transmit or receive device.

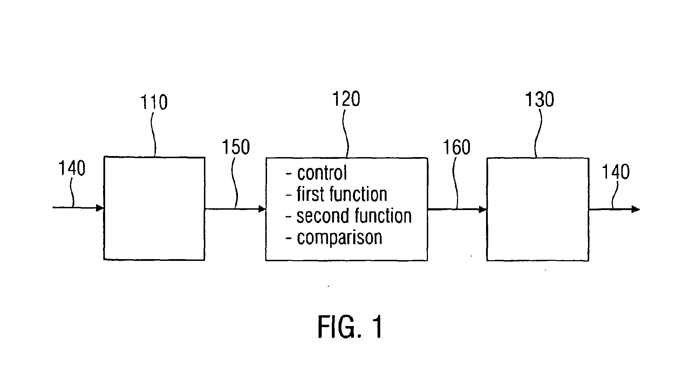

Fig. 1 shows an exemplary embodiment of an inventive apparatus comprising a receiver 110, a processing unit 120 and a transmitter 130. The processing unit 120 is implemented to control the receiver 110 and the transmitter 130, for example to change from one control state to another control state. The processing unit 120 increases an internal signal value or a phase, according to a first function or a phase function, being in control state 1. Being in control state 1 the receiver 110 is ready to receive a synchronization signal 140 from another apparatus, to decode the synchronization signal 140 and after successful reception or detection of the synchronization signal to send a detection signal 150 to the processing unit. A detection of the synchronization signal can be performed for example by a matched filter or correlation detector with the correlation peak being for example the detection signal 150. The processing unit 120 is also implemented to modify the internal signal value according to the second function, for example a phase response curve or coupling function, upon reception of the detection signal 150 being in control state 1. The processing unit is further implemented to compare the internal signal value with a given threshold value, for example $\Phi_{threshold}$, and as soon as the internal signal value equals the threshold value, to change for example to the second control state and at the same time being able to control the receiver 110 and the transmitter 130 to change to the second control state, too. The receiver 110, the processing unit 120 and the transmitter 130 will remain for a waiting time in the second control state, wherein the waiting time is greater than zero and smaller than a period of the first function. After the waiting time is over, the processing unit 120 will change to the third control state and can control the receiver 110 and the transmitter 130 to change to the third control state, too. At the same time the processing unit 120 will send a generation signal 160 to the transmitter 130 and the transmitter will transmit a synchronization signal 140 immediately upon reception of the generation signal 160.

Fig. 1 shows just one possible embodiment of the inventive apparatus, the apparatus can of course be implemented in a way, that for example the receiver 110, the processing unit 120 and the transmitter 130 are integrated into one single unit.

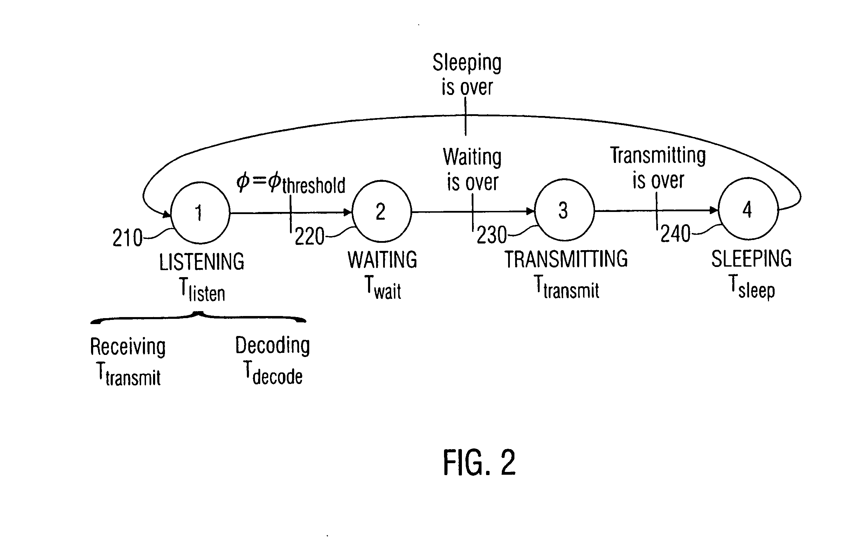

Fig. 2 shows an exemplary state machine describing the invention or oscillator or node with the additional control state or waiting state. The state machine comprises a first control state 210 or listening state, a second control state 220 or waiting state, a third control state 230 or transmitting state and a fourth control state 240 or sleeping state. When $\Phi$ equals $\Phi_{threshold}$ the inventive apparatus is implemented to change from the listening state 210 to the waiting state 220. When the waiting is over, for example after a waiting time $T_{wait}$, the inventive apparatus is implemented to change from the waiting state 220 to the transmitting state 230. After transmitting is over, for example after a transmitting time or synchronization signal length $T_{transmit}$ being greater than zero and smaller than the period of the phase function T, the exemplary inventive embodiment of the apparatus is implemented to change from the transmitting state 230 to the sleeping state 240. After sleeping is over, e.g. after a sleeping time $T_{sleep}$ being greater than zero and smaller than the period of the phase function T, the apparatus is implemented to change from the sleeping state 240 to the listening state 210. As described before, the apparatus being in the listening state 210 is ready to receive and decode the synchronization signal 240, wherein the time to receive a complete synchronization signal 140 is defined by the synchronization signal length $T_{transmit}$ and the time for decoding the synchronization signal is defined by the decoding time $T_{decode}$, both being larger than zero and smaller than the period of the phase function T. For the apparatus to be able to successfully receive and decode a synchronization signal the listening time $T_{listen}$ of the listening state 210 has to be larger than the sum of the synchronization signal length $T_{transmit}$ and the decoding time $T_{decode}$. For the implementation of the inventive apparatus concerning the waiting state 220, different concepts are possible, e.g. the inventive apparatus may either be "shut down", i.e. the phase is not increased over time according to the phase function nor is the receiver ready to receive and decode a synchronization signal, or the inventive apparatus may be in a similar state to the listening state 210, but with a refractory interval at the beginning of the waiting state 220, as it will be explained later.

Even if Fig. 2 shows a state machine with four control states, the invention is not limited to four control states, e.g., a different embodiment of the invention could only comprise three states, without the sleeping state 240, thus changing from the transmitting state 230 directly to the listening state 210.

Additional information like $T_{listen}$, $T_{wait}$, $T_{transmit}$, $T_{sleep}$, $T_{transmit}$ or $T_{decode}$ have been integrated into Fig. 2 for an easier understanding of the relation of the different timings and control states. For example $T_{listen}$ may on one hand be referred to as a predefined time and on the other hand referred to as an effective time, for which the inventive apparatus will remain in the listening state 210, for example during synchronization, as a successful reception and decoding of a synchronization signal can lead to an earlier reach of the threshold value.

As seen based on Fig. 19, the accuracy of the synchronization is limited by $T_{delay}$, which is equal to

$$T_{delay} = T_{propagation} + T_{transmit} + T_{decode}.$$

If considering a short range network with a short transmitting pulse, such as UWB systems, then the basic model would fit well, as $T_{delay}$ would be negligible [4]. However, if considering a wider range wireless network that uses longer transmitting bursts, then delays are disastrous for this synchronization scheme. For example, with a system using a sampling time of 5ns, if the length of a burst is 20µs, then $T_{transmit}$ equals 4000 samples. The accuracy of the timing synchronization would be at least equal to 4000 samples, which is clearly not acceptable. Therefore, there is a need to modify the synchronization strategy.

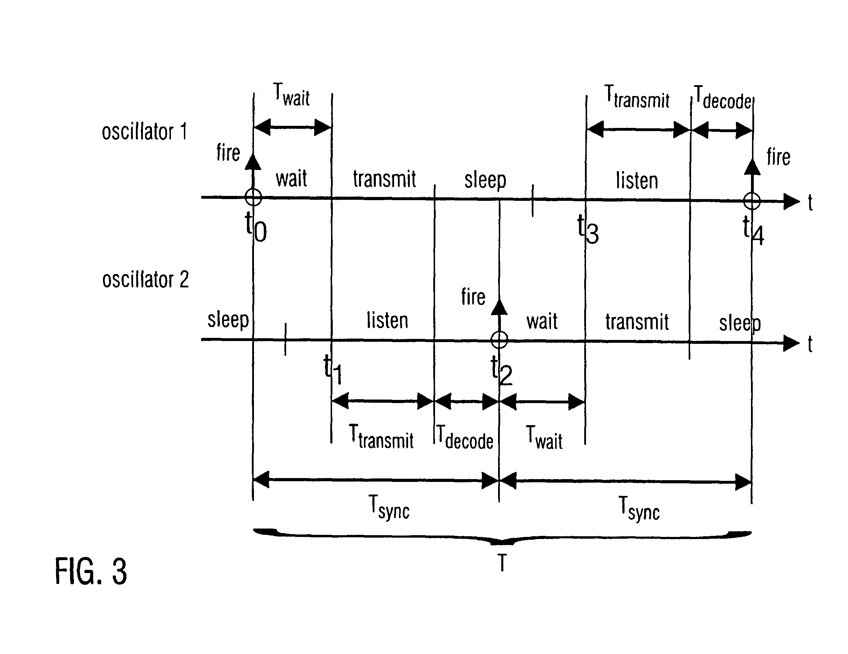

One strategy to combat this effect is for the transmitter to delay its transmission for a time equal to $T_{wait} = T_{sync} - (T_{transmit} + T_{decode})$, where $T_{sync}$ is the synchronized signal period. With this approach, the receiver or the receiving oscillator would increment its phase exactly $T_{sync}$ seconds after the transmitter has "fired", the term "fire" hereby does not refer anymore to an instant of the "transmit" itself as defined for a prior art apparatus, but referring now to the time, when the phase reached the threshold value, thus the oscillator being rather "fire-ready" but still having to wait the waiting time, as will be discussed later based on Fig. 3.

Fig. 3 sums up this strategy, in the following also referred to as the timing advance transmit strategy, for two oscillators that are already synchronized. At instant $t_0$, oscillator 1 reaches $\Phi_{threshold}$. It waits until $t_1$ = to + $T_{wait}$ before starting to transmit a synchronization burst. At $t_2$, oscillator 2 has successfully received and decoded the burst. As the two oscillators are already synchronized, it will follow the same scheme as oscillator 1, and wait until $t_3 = t_2 + T_{wait}$ before transmitting.

Generally a transmitter could wait for a time equal to $T_{wait}$ = L · $T_{sync}$ - ($T_{transmit}$ + $T_{decode}$), with L being an integer number. In the following, the case L = 1 is explained in more detail.

This scheme will only work if two conditions are met. First of all, $T_{transmit}$ + $T_{decode}$ cannot be larger than $T_{sync}$. Otherwise the waiting time would be negative, and L should be adjusted. This leads to the following condition

$$T_{transmit} + T_{decode} < T_{sync} \qquad (3)$$

Another condition for the scheme to have a chance to successfully synchronize is, that at instant $t_3$ in Fig. 3, oscillator 1 needs to be in listening state to receive the burst of oscillator 2. Therefore the time between to and end of the sleeping state needs to be smaller than $T_{sync}$ + $T_{wait}$. This imposes the condition $T_{wait}$ + $T_{transmit}$ + $T_{sleep}$ < $T_{sync}$ + $T_{wait}$, which simplifies to

$$T_{transmit} + T_{sleep} < T_{sync} \qquad (4)$$

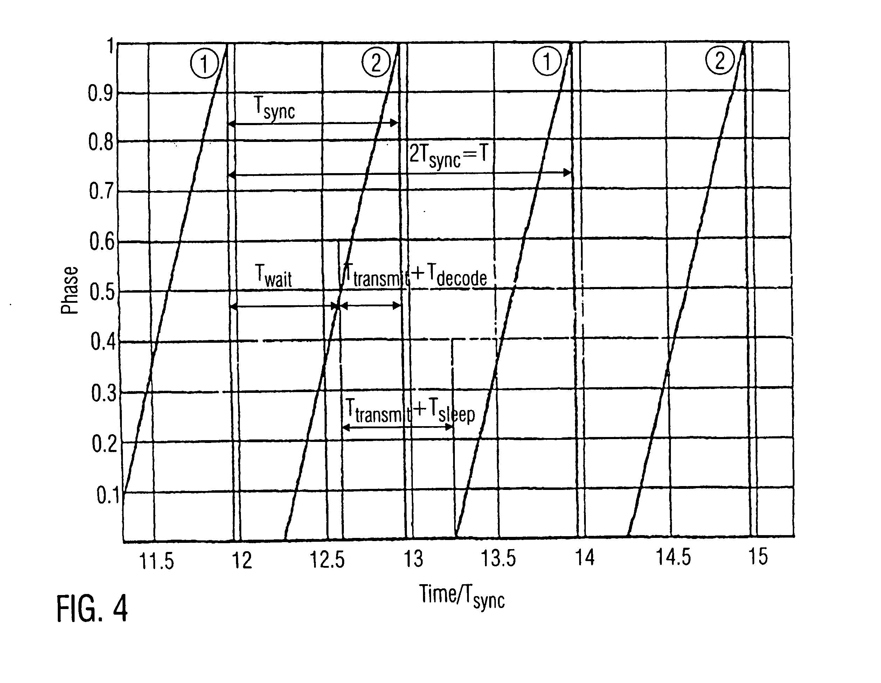

Once these conditions are met, two groups should form. Group 2 synchronizes thanks to the synchronization message of Group 1, and vice versa. Fig. 4 plots the resulting phases of 30 nodes that successfully synchronize using the Time Advance Synchronization scheme for $T_{sync}$ = 100μs, $T_{transmit}$ = 20μs, $T_{sleep}$ = 40μs, $T_{decode}$ = 10μs and b = 3. For simplification purposes, the considered cell containing all nodes is small ($T_{propagation}$ = 0 between all nodes).

Based on the novel timing advance strategy, the finite state machine described before is slightly modified.

On the state machine describing the state of one node, a waiting state is added before the transmitting state. A transmitter will stay in this state for a waiting time equal to $T_{wait}$, as indicated in Fig. 2.

To verify the validity of the time advance transmitting strategy, it is simulated under idealized conditions. Hence the following results were obtained under these assumptions: $T_{sampling}$ = 0,5μs, $T_{sync}$ = 100μs = 200$T_{sampling}$, noise is ignored, i.e. a very high Signal to Noise Ratio (SNR) assumed, coupling is fixed with parameters b = 3 (see Fig. 13), N = 30 nodes, nodes form a fully meshed network, and are uniformly distributed over an area of 50 meters by 50 meters (to simulate the propagation delay).

In this case, the maximum distance between two nodes is $d_{max} = 50 \cdot \sqrt{2}m$, and the maximum propagation delay is $\dfrac{d_{max}}{c} = 0.23\,\mu s < T_{sampling}$. Therefore the propagation delay is equal to zero samples between all nodes.

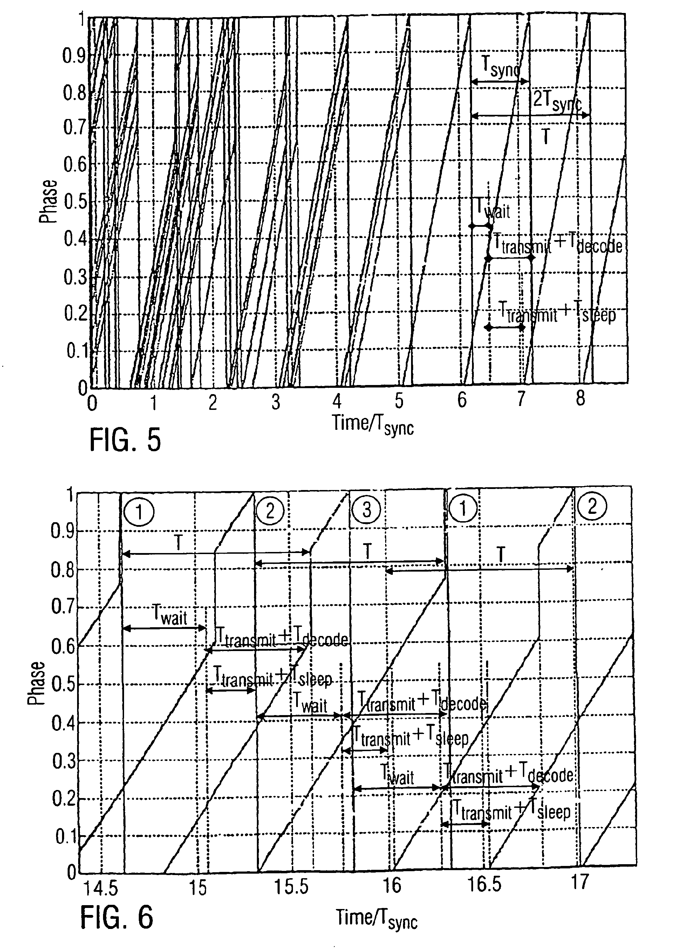

Fig. 5 shows that for $T_{transmit}$ = 35μs, $T_{sleep}$ = 20μs, $T_{decode}$ = 35μs, even though $T_{delay}$ = $T_{transmit}$ + $T_{decode}$ = 70ps, synchrony between the 30 nodes is achieved within 5.5$T_{sync}$. The accuracy is now not limited by $T_{delay}$.

Using different settings, synchrony is not always obtained. For example, if $T_{transmit}$ is decreased from 35μs to 20μs and $T_{sleep}$ is decreased from 20μs to 5μs, a different type of synchrony can be obtained with a system where three or more distinctive groups form. Fig. 6 shows for $T_{transmit}$ = 20μs, $T_{sleep}$ = 5μs, $T_{decode}$ = 35μs this synchrony with three groups. This type of synchrony is reminiscent of a case shown before, Group 1 influences Group 3, which influences Group 2, which influences Group 1.

As it was shown before, this type of synchrony occurred because $T_{sleep}$ was too small ($T_{listen}$ was too high). With the new transmit strategy, $T_{listen}$ = 2 Tsync - ($T_{wait}$ + $T_{transmit}$ + $T_{sleep}$), as $T_{wait}$ = $T_{sync}$ - ($T_{transmit}$ + $T_{decode}$),

$$T_{listen} = T_{sync} + T_{decode} - T_{sleep} \qquad (5)$$

To change the listening time, $T_{sleep}$ is the only parameter that needs to be modified. To avoid the wrong type of synchrony that is shown on Fig. 6, $T_{sleep}$ needs to be increased.

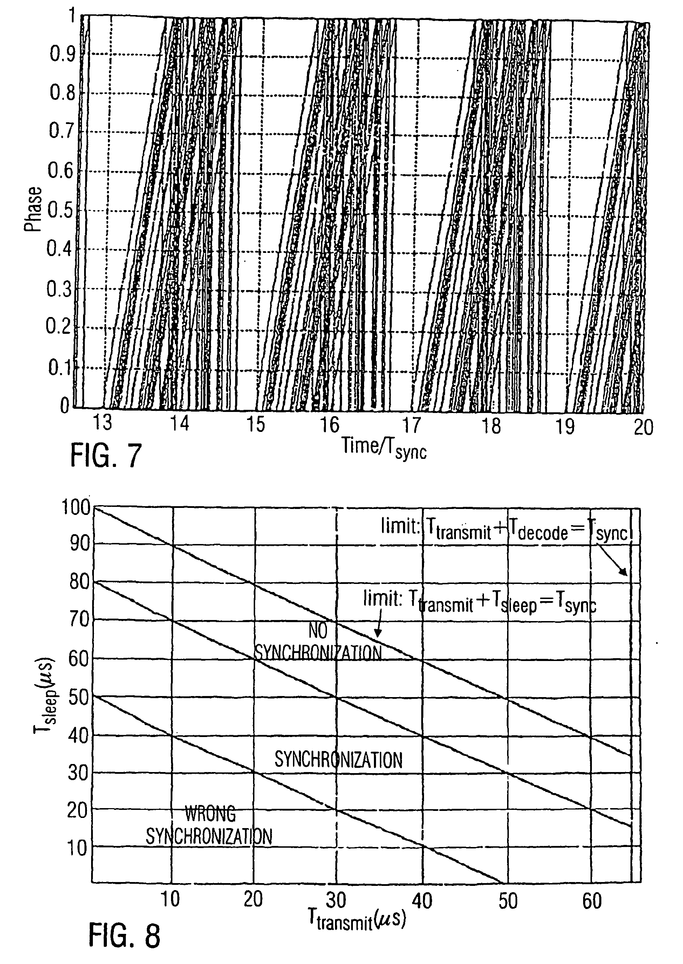

If the sleeping time $T_{sleep}$ is too high, no synchronization at all is obtained. Fig. 7 shows for $T_{transmit}$ = 35μs, $T_{sleep}$ = 60μs and $T_{decode}$ = 35μs the evolution of the 30 nodes in this case.

**EP 1 744 472 B1**

In this case, the sum $T_{transmit} + T_{sleep} = T_{delay}$ is too close to the limit given by (4). The listening time is too small, and the probability for the system to synchronize is too small as well. Therefore $T_{sleep}$ cannot be too high.

These three distinct cases lead to the question of finding when synchrony is always assured. By running simulations for $T_{sync} = 100\mu s$, $T_{decode} = 35\mu s$, b = 3 with different settings, Fig. 8 was obtained. It presents three distinct areas. On the bottom left corner, synchrony with more than two distinct groups is obtained (see Fig. 6). In the middle area, perfect synchrony is obtained (see Fig. 5). And in the top right hand corner, no synchrony is achieved (see Fig. 7).

These limits were obtained by running 100 simulations with the same settings. The rate of synchrony had to be more than 90% to declare the area "SYNCHRONIZATION".

From Fig. 8, as long as $T_{transmit} < 50\mu s$, $T_{sleep}$ can be chosen from a range of 30% of the period time $T_{sync}$ to achieve synchrony. For $50\mu s < T_{transmit} < 65\mu s$ synchronization is possible, but the range for $T_{sleep}$ is smaller.

The limits on Fig. 18 were obtained for a synchronization rate of 90%. This leads to finding out how the rate of synchronization evolves as a function of the sleeping time for a fixed transmitting time.

There is a direct correspondence between the sleeping time, $T_{sleep}$, and the listening time, $T_{listen}$, see equation (5). It is more interesting to view the evolution of the synchronization rate as a function of the listening time.

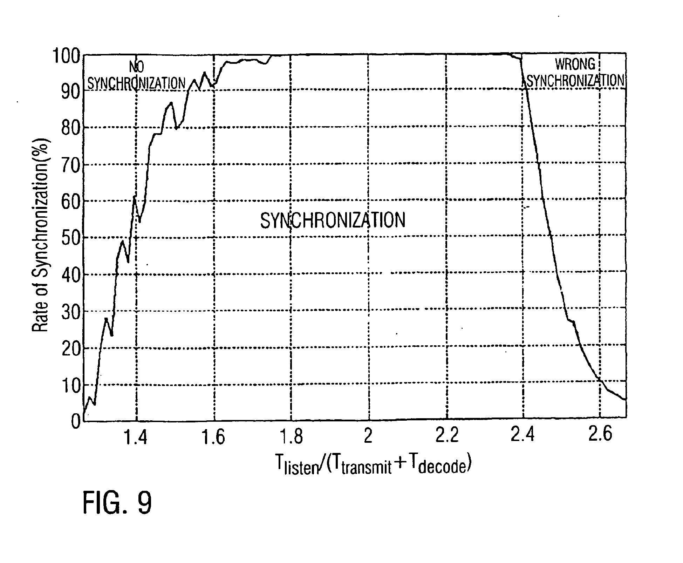

Fig. 9 was obtained by running 1000 simulations for $T_{sync} = 100\mu s$, $T_{decode} = 35\mu s$, $T_{transmit} = 0.5\mu s$, b = 3 for each settings to measure the synchronization rate.

Fig. 9 helps to understand the different synchronization phases. When $T_{listen}$ is too small ($T_{listen}$ needs to be at least equal to $T_{transmit} + T_{decode}$), no synchronization occurs and each node freely oscillates without hearing the other nodes. Progressively, as $T_{listen}$ raises, nodes are more likely to hear one another and the synchronization rate raises rapidly. For a range that is roughly $0.30\ T_{sync}$ wide, synchronization will occur. Then, suddenly this rate will rapidly decrement as $T_{listen}$ is too large. In this case, nodes hear too many discordant messages, and a wrong type of synchrony is achieved where more than two groups form.

It should be noted, that synchronization schemes based on pulse coupled oscillators applied to wireless networks, utilize one common synchronization word (or sequence), as opposed to a unique synchronization word for each node. A unique synchronization word for each node would be required if a certain node is to be identified. As for large networks with a significant number of nodes, the number of required synchronization words is also large. Moreover, the assignment of unique synchronization words may be difficult to achieve in a self-organized network. Since the considered synchronization scheme only requires one common synchronization word, this problem is mitigated. Furthermore, the problem to identify a node associated with a certain synchronization word is also omitted.

Summarizing the invention it can be said that the invention addresses a self-organized synchronization algorithm for wireless networks. A decentralized network is considered, so no global coordination unit which manages the behaviour of terminals is assumed. The proposed solution is applicable to a wide range of applications, such as wireless sensor networks, ad-hoc networks, multi-hop networks and even cellular networks. With the invention and the novel wait and timing advance strategy synchronization of a self organized wireless network can be assured even if the transmitting time $T_{TX}$ is 50% of the entire frame or burst period $T_{sync}$. This is a significant improvement with respect to the state of the art [4], where the attainable synchronization accuracy cannot exceed $T_{transmit}$, i.e. if $T_{transmit} = T/2$ as in the above example, the synchronization accuracy cannot be better than T/2 or $T_{sync}/2$.

The inventive approach to combat the effect is as described before for the transmitter to delay its transmission for a certain time equal to $T_{wait} = T_{sync} - (T_{transmit} + T_{decode})$, where $T_{decode}$ and $T_{sync}$ account for the decoding delay which is assumed to be known, and the synchronized signal period, respectively. With this approach, the receiver will increment its phase exactly T seconds after the transmitter has fired. Generally a transmitter could wait for a time equal to $T_{wat} = L \cdot T_{sync} - (T_{transmit} + T_{decode})$, with $L \geq 1$ being a positive integer.

Instead of directly firing, i.e. transmitting a synchronization burst, the transmitter waits being "fire-ready" for L synchronized signal periods; taking into account the time span which is consumed by transmitting. This corresponds as described before to a timing advance strategy, which ensures that other nodes do not observe the unavoidable transmission and decoding delay.

To facilitate the understanding of the inventive apparatus, method and the underlying synchronization protocol the latter was described by means of a finite state machine (FSM) as shown in Fig. 2. Compared to the prior art, as described before, an additional state is added, marked as the second state or waiting state, in Fig. 2. In a preferred embodiment of the invention a transmitter will stay in the state for a waiting time equal to $T_{wait}$. This new waiting state in combination with the time advance strategy is the major advantage of the invention allowing for an improved synchronization accuracy.

Depending on certain implementation requirements of the inventive methods, the inventive methods can be implemented in hardware or in software. The implementation can be performed using a digital storage medium, in particular a disk, DVD or a CD having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

Reference Sign List

| | |
|---|---|
| 110 | Receiver |
| 120 | Processing unit |
| 130 | Transmitter |
| 140 | Synchronization signal |
| 150 | Detection signal |
| 160 | Generation signal |
| 210 | First control state or listening state |
| 220 | Second control state or waiting state |
| 230 | Third control state or transmitting state |
| 240 | Fourth control state or sleeping state |

**Claims**

1. Apparatus for synchronizing a first transmit and receive device to a second transmit and receive device comprising:

a receiver (110) implemented to receive a synchronization signal (140) from the second transmit and receive device;
a transmitter (130) implemented to transmit a synchronization signal (140) which after a synchronization time is in synchronism with the synchronization signal (140) from the second transmit and receive device;
a processing unit (120) implemented to increase a phase ($\Phi$) according to a given phase function over time, to increment the phase ($\Phi$) upon receiving a detection signal (150) according to a phase response curve ($\Delta\Phi$) and to compare the phase ($\Phi$) with a given threshold value ($\Phi_{threshold}$) when the apparatus is in a listening state (210), wherein the processing unit (120) is further implemented:

to control the receiver (110) to be ready to receive the synchronization signal (140) from the second transmit and receive device in the listening state (210);

**characterized in that** the processing unit (120) is further implemented to:

to control the transmitter (130) to wait a waiting time, the waiting time being greater than zero and smaller than a period of the phase function, in a waiting state (220), which is reached, when the phase ($\Phi$) is equal to the threshold value ($\Phi_{threshold}$), wherein the period of a phase function is the period between two synchronization signals of the transmit and receive device; and to control the transmitter (130) to transmit the synchronization signal (140) in a transmitting state (230), which begins, when the waiting time is over.

2. The apparatus according to claim 1, wherein the processing unit (120) is controlled such, that after the transmission of the synchronization signal (140), being in a sleeping state (240) the processing unit (120) can not enter the waiting state (220) during a sleeping time (240) wherein the sleeping time is larger than zero and smaller than the period of the phase function.

3. The apparatus according to claim 1 or 2, wherein the processing unit (120) is implemented to use a waiting time $T_{wait}$ which is determined by a synchronized signal period $T_{sync}$, a synchronization signal length Transmit and a decoding time Decode, wherein the synchronized signal period $T_{sync}$ is a minimum time interval being greater than zero between two synchronization signals (140) of two distinct transmit and receive devices in synchronized state, wherein the synchronization signal length $T_{transmit}$ is a time to transmit the synchronization signal (140) and wherein the decoding time $T_{decode}$ is a time taken by the receiver (110) to decode the synchronization signal (140) and wherein $T_{sync}$, $T_{transmit}$ and $T_{decode}$ are larger than zero and smaller than the period of the phase function.

4. The apparatus according to any of the claims 1 to 3, wherein the processing unit (120) is implemented to use a waiting time $T_{wait}$ which is determined by a synchronized signal period $T_{sync}$, a synchronization signal length $T_{transmit}$,

a decoding time $T_{decode}$ and furthermore determined by the following equation:

$$T_{wait} \leq L \cdot T_{sync} - (T_{transmit} + T_{decode});$$

wherein the synchronized signal period $T_{sync}$ is a minimum time interval being greater than zero between two synchronization signals (140) of two distinct transmit and receive devices in synchronized state, wherein the synchronization signal length $T_{transmit}$ is a time to transmit the synchronization signal (140), wherein the decoding time $T_{decode}$ is a time taken by the receiver (110) to decode the synchronization signal (140) and wherein $L \geq 1$ is a positive integer.

5. The apparatus according to any of the claims 1 to 4, wherein the processing unit (120) is implemented thus, that the following conditions are fulfilled:

$$L = 1;$$

$$T_{transmit} + T_{decode} < T_{sync}; \text{ and}$$

$$T_{transmit} + T_{sleep} < T_{sync};$$

wherein $T_{sleep}$ is a sleeping time after the transmission of the synchronization signal (140), wherein the processing unit (120) is controlled such, that the processing unit (120) can not enter the waiting state (220) during a sleeping time, wherein $T_{sync}$ is a synchronized signal period which is a minimum time interval greater than zero between two synchronization signals (140) of two distinct transmit and receive devices, wherein $T_{transmit}$ is a synchronization signal length which is a time to transmit the synchronization signal (140), wherein $T_{decode}$ is a decoding time which is a time taken by the receiver (110) to decode the synchronization signal (140) and wherein $L \geq 1$ is a positive integer.

6. The apparatus according to claim 5, in which the processing unit (120) is controlled to not increment the phase ($\Phi$) according to the phase response curve ($\Delta\Phi$) during the sleeping time.

7. The apparatus according to any of the claims 1 to 6, wherein the processing unit (120) is implemented to use a listening time $T_{listen}$ which describes a duration of the listening state (210) and is determined by a synchronized signal period $T_{sync}$ which is a minimum time interval greater than zero between two synchronization signals (140) of two distinct transmit and receive devices, a decoding time $T_{decode}$ which is a time taken by the receiver (110) to decode the synchronization signal (140) and a sleeping time $T_{sleep}$ which is a time after the transmission of the synchronization signal (140), wherein the processing unit (120) is controlled such, that the processing unit (120) can not enter the waiting state (220) during a sleeping time, and wherein $T_{listen}$ is greater than zero and smaller than the period of the phase function.

8. The apparatus according to any of the claims 1 to 7, wherein the processing unit (120) is implemented to use a listening time $T_{listen}$ which is determined by the following equation:

$$T_{listen} \leq T_{sync} + T_{decode} - T_{sleep};$$

wherein $T_{sync}$ is a synchronized signal period which is a minimum time interval greater than zero between two synchronization signals (140) of two distinct transmit and receive devices, wherein $T_{decode}$ is a decoding time which is a time taken by the receiver (110) to decode the synchronization signal (140) and wherein $T_{sleep}$ is a sleeping

time which is a time after the transmission of the synchronization signal (140), wherein the processing unit (120) is controlled such, that the processing unit (120) can not enter the waiting state (220) during a sleeping time.

9.  The apparatus according to any of the claims 1 to 8, wherein the processing unit (120) is implemented to use a synchronization signal length $T_{transmit}$ and a sleeping time
    $T_{sleep}$, when $T_{transmit}$ and $T_{sleep}$ depend on a synchronized signal period $T_{sync}$ and a decoding time $T_{decode}$, in accordance with the following equation: $0 < \text{Transmit} < T_{sync} - T_{decode}$, wherein the sleeping time $T_{sleep}$ is determined by a lower limit and an upper limit of the same, both limits being functions of $T_{transmit}$, wherein the upper limit is given by $T_{sleep}$ being smaller than $T_{sync} - T_{transmit}$, wherein the synchronization signal length $T_{transmit}$ is a time to transmit the synchronization signal (140), wherein the sleeping time $T_{sleep}$ is a time after the transmission of the synchronization signal (140), wherein the processing unit (120) is controlled such, that the processing unit (120) cannot enter the waiting state (220) during a sleeping time, wherein the synchronized signal period $T_{sync}$ is a minimum time interval greater than zero between two synchronization signals (140) of two distinct transmit and receive devices and wherein the decoding time $T_{decode}$ is a time taken by the receiver (110) to decode the synchronization signal (140).

10. The apparatus according to any of the claims 1 to 9, wherein the processing unit (120) is implemented to use a synchronization signal length $T_{transmit}$ and a sleeping time $T_{sleep}$, when $T_{transmit}$ and $T_{sleep}$ depend on a synchronized signal period $T_{sync}$ and a decoding time $T_{decode}$, in accordance with the following equation: $0 < \text{Transit} < T_{sync} - T_{decode}$, wherein the sleeping time $T_{sleep}$ is determined by a lower limit and an upper limit of the same, both limits being functions of $T_{transmit}$, wherein the lower limit is higher or equal to a propagation delay $T_{propagation}$ and the upper limit is smaller or equal to 80% of the synchronized signal period $T_{sync}$, wherein the synchronization signal length $T_{transmit}$ is a time to transmit the synchronization signal (140), wherein the sleeping time $T_{sleep}$ is a time after the transmission of the synchronization signal (140), wherein the processing unit (120) is controlled such, that the processing unit (120) cannot enter the waiting state (220) during a sleeping time, wherein the synchronized signal period $T_{sync}$ is a
    minimum time interval greater than zero between two synchronization signals (140) of two distinct transmit or receive devices, wherein the decoding time $T_{decode}$ is a time taken by the receiver (110) to decode the synchronization signal (140) and wherein the propagation delay $T_{propagation}$ is a time needed by the synchronization signal (140) to propagate from the transmitter (130) of the second transmit and receive device to the receiver (110) of the first transmit and receive device.

11. The apparatus according to one of the claims 1 to 10, wherein the processing unit (120) is implemented to deactivate the receiver (110) during the waiting time $T_{wait}$ to not receive a synchronization signal (140).

12. Method for synchronizing a first transmit and receive device to a second transmit and receive device comprising the following steps:

    increasing a phase ($\Phi$) according to a given phase function over time being in a listening state (210);
    receiving and decoding a synchronization signal (140) from a second transmit and receive device and incrementing the phase ($\Phi$) according to a phase response curve ($\Delta\Phi$) being in a listening state (210);
    comparing the phase ($\Phi$) with a threshold value ($\Phi_{threshold}$) being in a listening state (210);

    **characterized in that** the method further comprises the steps:

    changing to a waiting state (220) when the phase ($\Phi$) equals the threshold value ($\Phi_{threshold}$);
    waiting a waiting time, the waiting time being greater than zero and smaller than a period of the phase function in the waiting state (220), wherein a period of the phase function is the period between two synchronization signals (140) of the transmit and receive device, and changing to a transmitting state (230); and
    transmitting the synchronization signal (140) being in the transmitting state (230).

13. Computer program having a program code for performing a method in accordance with claim 12, when the program runs on a computer.

14. Transmit and receive device comprising:

    an apparatus for synchronizing a first transmit and receive device to a second transmit and receive device according to one of the claims 1 to 11; and
    a controller for controlling a message transmission and a message reception based on a timing of the synchronization signal (140).

**Patentansprüche**

1. Vorrichtung zum Synchronisieren eines ersten Sende- und Empfangs-Bauelements mit einem zweiten Sende- und Empfangs-Bauelement, die folgende Merkmale aufweist:

einen Empfänger (110), der implementiert ist, um ein Synchronisationssignal (140) von dem zweiten Sende- und Empfangs-Bauelement zu empfangen;
einen Sender (130), der ausgebildet ist, um ein Synchronisationssignal (140) zu übertragen, das nach einer Synchronisationszeit in Synchronismus mit dem Synchronisationssignal (140) von dem zweiten Sende- und Empfangs-Bauelement ist;
eine Verarbeitungseinheit (120), die implementiert ist, um eine Phase ($\Phi$) gemäß einer gegebenen Phasenfunktion über der Zeit zu erhöhen, um die Phase ($\Phi$) zu inkrementieren, nach dem Empfangen eines Erfassungssignals (150), gemäß einer Phasenantwortkurve ($\Delta\Phi$), und die Phase ($\Phi$) mit einem gegebenen Schwellenwert ($\Phi_{threshold}$) zu vergleichen, wenn die Vorrichtung in einem Hörzustand (210) ist, wobei die Verarbeitungseinheit (120) ferner ausgebildet ist, zum:

Steuern des Empfängers (110), um bereit zu sein, das Synchronisationssignal (140) von dem zweiten Sende- und Empfangs-Bauelement in dem Hörzustand (210) zu empfangen;

**dadurch gekennzeichnet, dass** die Verarbeitungseinheit (120) ferner implementiert ist zum:

Steuern des Senders (130), um eine Wartezeit zu warten, wobei die Wartezeit größer ist als null und kleiner ist als eine Periode der Phasenfunktion, in einem Wartezustand (220), der erreicht ist, wenn die Phase ($\Phi$) gleich dem Schwellenwert ($\Phi_{threshold}$) ist, wobei die Periode einer Phasenfunktion die Periode zwischen zwei Synchronisationssignalen des Sende- und Empfangs-Bauelements ist; und
Steuern des Senders (130), um das Synchronisationssignal (140) in einem Sendezustand (230) zu senden, der beginnt, wenn die Wartezeit vorüber ist.

2. Die Vorrichtung gemäß Anspruch 1, bei der die Verarbeitungseinheit (120) derart gesteuert wird, dass nach der Übertragung des Synchronisationssignals (140) die Verarbeitungseinheit (120), wenn sie in einem Schlafzustand (240) ist, nicht in den Wartezustand (220) während einer Schlafzeit (240) eintreten kann, wobei die Schlafzeit größer ist als null und kleiner ist als die Periode der Phasenfunktion.

3. Die Vorrichtung gemäß Anspruch 1 oder 2, bei der die Verarbeitungseinheit (120) implementiert ist, um eine Wartezeit $T_{wait}$ zu verwenden, die durch eine synchronisierte Signalperiode $T_{sync}$, eine Synchronisationssignallänge $T_{transmit}$ und eine Decodierzeit $T_{decode}$ bestimmt ist, wobei die synchronisierte Signalperiode $T_{sync}$ ein minimales Zeitintervall ist, das größer ist als null zwischen zwei Synchronisationssignalen (140) von zwei unterschiedlichen Sende- und Empfangs-Bauelementen in einem synchronisierten Zustand, wobei die Synchronisationssignallänge $T_{transmit}$ eine Zeit ist, um das Synchronisationssignal (140) zu übertragen und wobei die Decodierzeit $T_{decode}$ eine Zeit ist, die durch den Empfänger (110) genommen wird, um das Synchronisationssignal (140) zu decodieren, und wobei $T_{sync}$, $T_{transmit}$ und $T_{decode}$ größer als null sind und kleiner als die Periode der Phasenfunktion.

4. Die Vorrichtung gemäß einem der Ansprüche 1 bis 3, bei der die Verarbeitungseinheit (120) implementiert ist, um eine Wartezeit $T_{wait}$ zu verwenden, die bestimmt ist durch eine synchronisierte Signalperiode $T_{sync}$, eine Synchronisationssignallänge $T_{transmit}$, eine Decodierzeit $T_{decode}$ und ferner bestimmt ist durch die nachfolgende Gleichung:

$$T_{wait} \leq L \cdot T_{sync} - (T_{transmit} + T_{decode});$$

wobei die synchronisierte Signalperiode $T_{sync}$ ein minimales Zeitintervall ist, das größer ist als null zwischen zwei Synchronisationssignalen (140) und zwei unterschiedlichen Sende- und Empfangs-Bauelementen in einem synchronisierten Zustand, wobei die Synchronisationssignallänge $T_{transmit}$ eine Zeit ist, um das Synchronisationssignal (140) zu übertragen, wobei die Decodierzeit $T_{decode}$ eine Zeit ist, die durch den Empfänger (110) genommen wird, um das Synchronisationssignal (140) zu decodieren, und wobei L ≥ 1 eine positive ganze Zahl ist.

5. Die Vorrichtung gemäß einem der Ansprüche 1 bis 4, bei der die Verarbeitungseinheit (120) derart implementiert ist, dass die nachfolgenden Bedingungen erfüllt sind:

$$L = 1$$

$$T_{transmit} + T_{decode} < T_{sync}; \text{ und}$$

$$T_{transmit} + T_{sleep} < T_{sync;}$$

wobei $T_{sleep}$ eine Schlafzeit nach der Übertragung des Synchronisationssignals (140) ist, wobei die Verarbeitungseinheit (120) derart gesteuert ist, dass die Verarbeitungseinheit (120) nicht in den Wartezustand (220) während einer Schlafzeit eintreten kann, wobei $T_{sync}$ eine synchronisierte Signalperiode ist, die ein minimales Zeitintervall größer als null ist, zwischen zwei Synchronisationssignalen (140) von zwei unterschiedlichen Sende- und Empfangs-Bauelementen, wobei $T_{transmit}$ eine Synchronisationssignallänge ist, die eine Zeit ist zum Übertragen des Synchronisationssignals (140) ist, wobei $T_{decode}$ eine Decodierzeit ist, die eine Zeit ist, die durch den Empfänger (110) genommen wird, um das Synchronisationssignal (140) zu decodieren, und wobei L ≥ 1 eine positive ganze Zahl ist.

6. Die Vorrichtung gemäß Anspruch 5, bei der die Verarbeitungseinheit (120) gesteuert ist, um die Phase (Φ) gemäß der Phasenantwortkurve (ΔΦ) während der Schlafzeit nicht zu imkrementieren.

7. Die Vorrichtung gemäß einem der Ansprüche 1 bis 6, bei der die Verarbeitungseinheit (120) implementiert ist, um eine Hörzeit $T_{listen}$ zu verwenden, die eine Dauer des Hörzustands (210) beschreibt, und bestimmt ist durch eine synchronisierte Signalperiode $T_{sync}$, die ein minimales Zeitintervall größer als null zwischen zwei Synchronisationssignalen (140) von zwei unterschiedlichen Sende- und Empfangs-Bauelementen ist, eine Decodierzeit $T_{decode}$, die eine Zeit ist, die durch den Empfänger (110) genommen wird, um das Synchronisationssignal (140) zu decodieren, und eine Schlafzeit $T_{sleep}$, die eine Zeit nach der Übertragung des Synchronisationssignals (140) ist, wobei die Verarbeitungseinheit (120) derart gesteuert ist, dass die Verarbeitungseinheit (120) nicht in den Wartezustand (220) während einer Schlafzeit eintreten kann, und wobei $T_{listen}$ größer ist als null und kleiner als die Periode der Phasenfunktion.

8. Die Vorrichtung gemäß einem der Ansprüche 1 bis 7, bei der die Verarbeitungseinheit (120) implementiert ist, eine Hörzeit $T_{listen}$ zu verwenden, die bestimmt ist durch die nachfolgende Gleichung:

$$T_{listen} \leq T_{sync} + T_{decode} - T_{sleep;}$$

wobei $T_{sync}$ eine synchronisierte Signalperiode ist, die ein minimales Zeitintervall größer als null zwischen zwei Synchronisationssignalen (140) von zwei unterschiedlichen Sende- und Empfangs-Bauelementen ist, wobei $T_{decode}$ eine Decodierzeit ist, die eine Zeit ist, die durch den Empfänger (110) genommen wird, um das Synchronisationssignal (140) zu decodieren und wobei $T_{sleep}$ eine Schlafzeit ist, die eine Zeit nach der Übertragung des Synchronisationssignals (140) ist, wobei die Verarbeitungseinheit (120) derart gesteuert ist, dass die Verarbeitungseinheit (120) nicht in den Wartezustand (220) während einer Schlafzeit eintreten kann.

9. Die Vorrichtung gemäß einem der Ansprüche 1 bis 8, bei der die Verarbeitungseinheit (120) implementiert ist, um eine Synchronisationssignallänge $T_{transmit}$ und eine Schlafzeit $T_{sleep}$ zu verwenden, wenn $T_{transmit}$ und $T_{sleep}$ von einer synchronisierten Signalperiode $T_{sync}$ und einer Decodierzeit $T_{decode}$ abhängen, gemäß der nachfolgenden Gleichung: $0 < T_{transmit} < T_{sync} - T_{decode}$, wobei die Schlafzeit $T_{sleep}$ bestimmt ist durch eine Untergrenze und eine Obergrenze derselben, wobei beide Grenzen Funktionen von $T_{transmit}$ sind, wobei die Obergrenze dadurch gegeben

ist, dass $T_{sleep}$ kleiner ist als $T_{sync}$ - $T_{transmit}$, wobei die Synchronisationssignallänge $T_{transmit}$ eine Zeit ist, um das Synchronisationssignal (140) zu übertragen, wobei die Schlafzeit $T_{sleep}$ eine Zeit nach der Übertragung des Synchronisationssignals (140) ist, wobei die Verarbeitungseinheit (120) derart gesteuert ist, dass die Verarbeitungseinheit (120) nicht in den Wartezustand (220) während einer Schlafzeit eintreten kann, wobei die synchronisierte Signalperiode $T_{sync}$ ein minimales Zeitintervall größer als null zwischen zwei Synchronisationssignalen (140) von zwei unterschiedlichen Sende- und Empfangs-Bauelementen ist und wobei die Decodierzeit $T_{decode}$ eine Zeit ist, die durch den Empfänger (110) genommen wird, um das Synchronisationssignal (140) zu decodieren.

10. Die Vorrichtung gemäß einem der Ansprüche 1 bis 9, bei dem die Verarbeitungseinheit (120) implementiert ist, um eine Synchronisationssignallänge $T_{transmit}$ und eine Schlafzeit $T_{sleep}$ zu verwenden, wenn $T_{transmit}$ und $T_{sleep}$ von einer synchronisierten Signalperiode $T_{sync}$ und einer Decodierzeit $T_{decode}$ abhängen, gemäß der nachfolgenden Gleichung: $0 < T_{transmit} < T_{sync} - T_{decode}$, wobei die Schlafzeit $T_{sleep}$ bestimmt ist durch eine Untergrenze und eine Obergrenze derselben, wobei beide Grenzen Funktionen von $T_{transmit}$ sind, wobei die Untergrenze größer oder gleich einer Ausbreitungsverzögerung $T_{propagation}$ ist und die Obergrenze kleiner oder gleich 80% der synchronisierten Signalperiode $T_{sync}$ ist, wobei die Synchronisationssignallänge $T_{transmit}$ eine Zeit ist, um das Synchronisationssignal (140) zu übertragen, wobei die Schlafzeit $T_{sleep}$ eine Zeit nach der Übertragung des Synchronisationssignals (140) ist, wobei die Verarbeitungseinheit (120) derart gesteuert ist, dass die Verarbeitungseinheit (120) nicht in den Wartezustand (220) während einer Schlafzeit eintreten kann, wobei die synchronisierte Signalperiode $T_{sync}$ ein minimales Zeitintervall größer als null zwischen zwei Synchronisationssignalen (140) von zwei unterschiedlichen Sende- oder Empfangs-Bauelementen ist, wobei die Decodierzeit $T_{decode}$ eine Zeit ist, die durch den Empfänger (110) genommen wird, um das Synchronisationssignal (140) zu decodieren, und wobei die Ausbreitungsverzögerung $T_{propagation}$ eine Zeit ist, die von dem Synchronisationssignal (140) benötigt wird, um sich von dem Sender (130) des zweiten Sende- und Empfangs-Bauelements zu dem Empfänger (110) des ersten Sende- und Empfangs-Bauelements auszubreiten.

11. Die Vorrichtung gemäß einem der Ansprüche 1 bis 10, bei der die Verarbeitungseinheit (120) implementiert ist, um den Empfänger (110) während der Wartezeit $T_{wait}$ zu deaktivieren, um kein Synchronisationssignal (140) zu empfangen.

12. Verfahren zum Synchronisieren eines ersten Sende- und Empfangs-Bauelements mit einem zweiten Sende- und Empfangs-Bauelement, das folgende Schritte aufweist:

Erhöhen einer Phase ($\Phi$) gemäß einer gegebenen Phasenfunktion über der Zeit, im einen Hörzustand (310);
Empfangen und Decodieren eines Synchronisationssignals (140) von einem zweiten Sende- und Empfangs-Bauelement und Inkrementieren der Phase ($\Phi$) gemäß einer Phasenantwortkurve ($\Delta\Phi$), in einem Hörzustand (310);
Vergleichen der Phase ($\Phi$) mit einem Schwellenwert $\Phi_{threshold}$, in einem Hörzustand (210);

**dadurch gekennzeichnet, dass** das Verfahren ferner folgende Schritte aufweist:

Wechseln in einen Wartezustand (220), wenn die Phase ($\Phi$) gleich dem Schwellenwert $\Phi_{threshold}$ ist;
Warten eine Wartezeit, wobei die Wartezeit größer ist als null und kleiner ist als eine Periode der Phasenfunktion in dem Wartezustand (220), wobei eine Periode der Phasenfunktion die Periode zwischen zwei Synchronisationssignalen (140) des Sende- und Empfangs-Bauelements ist, und Wechseln in einen Sendezustand (230); und
Senden des Synchronisationssignals (140) in dem Sendezustand (230);

13. Computerprogramm mit einem Programmcode zum Ausführen eines Verfahrens gemäß Anspruch 12, wenn das Programm auf einem Computer ausgeführt wird.

14. Sende- und Empfangs-Bauelement, das folgende Merkmale aufweist:

Eine Vorrichtung zum Synchronisieren eines ersten Sende- und Empfangs-Bauelements mit einem zweiten Sende- und Empfangs-Bauelement gemäß einem der Ansprüche 1 bis 11; und
eine Steuerung zum Steuern einer Meldungsübertragung und eines Meldungsempfangs basierend auf einer Zeitgebung des Synchronisationssignals (140).

**Revendications**

1. Dispositif de synchronisation d'un premier dispositif d'émission et de réception avec un deuxième dispositif d'émission et de réception, comprenant:

   un récepteur (110) mis en oeuvre pour recevoir un signal de synchronisation (140) du deuxième dispositif d'émission et de réception;
   un émetteur (130) mis en oeuvre pour émettre un signal de synchronisation (140) qui, après un temps de synchronisation,
   est en synchronisme avec le signal de synchronisation (140) du deuxième dispositif d'émission et de réception;
   une unité de traitement (120) mise en oeuvre pour augmenter une phase ($\Phi$) selon une fonction de phase donnée dans le temps, pour augmenter la phase ($\Phi$) à la réception d'un signal de détection (150) selon une courbe de réponse de phase ($\Delta\Phi$) et pour comparer la phase ($<\Phi$) avec une valeur de seuil donnée ($\Phi_{threshold}$) lorsque le dispositif est à l'état d'écoute (210), où l'unité de traitement (120) est par ailleurs mise en oeuvre:

   pour commander le récepteur (110) de manière à être prêt à recevoir le signal de synchronisation (140) du deuxième dispositif d'émission et de réception à l'état d'écoute (210);

   **caractérisé par le fait que** l'unité de traitement (120) est par ailleurs mise en oeuvre:

   pour commander l'émetteur (130) de manière à attendre pendant un temps d'attente, le temps d'attente étant supérieur à zéro et inférieur à une période de la fonction phase, à l'état d'attente (220) qui est atteint lorsque la phase ($\Phi$) est égale à la valeur de seuil ($\Phi_{threshold}$), où la période d'une fonction de phase est la période entre deux signaux de synchronisation du dispositif d'émission et de réception; et
   pour commander l'émetteur (130) de manière à émettre le signal de synchronisation (140) à l'état d'émission (230) qui commence lorsque le temps d'attente est écoulé.

2. Dispositif selon la revendication 1, dans lequel l'unité de traitement (120) est commandée de sorte que, après l'émission du signal de synchronisation (140), à l'état de sommeil (240), l'unité de traitement (120) ne puisse pas entrer à l'état d'attente (220) pendant un temps de sommeil (240), où le temps de sommeil est supérieur à zéro et inférieur à la période de la fonction de phase.

3. Dispositif selon la revendication 1 ou 2, dans lequel l'unité de traitement (120) est mise en oeuvre pour utiliser un temps d'attente $T_{wait}$ qui est déterminé par une période de signal synchronisée $T_{sync}$, une longueur de signal de synchronisation $T_{transmit}$ et un temps de décodage $T_{decode}$, où la période de signal synchronisée $T_{sync}$ est un intervalle de temps minimum supérieur à zéro entre deux signaux de synchronisation (140) de deux dispositifs d'émission et réception différents à l'état synchronisé, où la longueur de signal de synchronisation $T_{transmit}$ est un temps pour émettre le signal de synchronisation (140) et où le temps de décodage $T_{decode}$ est un temps pris par le récepteur (110) pour décoder le signal de synchronisation (140) et où $T_{sync}$, $T_{transmit}$ et $T_{decode}$ sont supérieurs à zéro et inférieurs à la période de la fonction de phase.

4. Dispositif selon l'une quelconque des revendications 1 à 3, dans lequel l'unité de traitement (120) est mise en oeuvre pour utiliser un temps d'attente $T_{wait}$ qui est déterminé par une période de signal synchronisée $T_{sync}$, une longueur de signal de synchronisation $T_{transmit}$ et un temps de décodage $T_{decode}$ et qui est par ailleurs déterminé par l'équation suivante:

$$T_{wait} \leq L \cdot T_{sync} - (T_{transmit} + T_{decode});$$

   où la période de signal synchronisée $T_{sync}$ est un intervalle de temps minimum supérieur à zéro entre deux signaux de synchronisation (140) de deux dispositifs d'émission et de réception différents à l'état synchronisé, où la longueur de signal de synchronisation $T_{transmit}$ est un temps pour émettre le signal de synchronisation (140), où le temps de décodage $T_{decode}$ est un temps pris par le récepteur (110) pour décoder le signal de synchronisation (140) et où $L \geq 1$ est un nombre entier positif.

5. Dispositif selon l'une quelconque des revendications 1 à 4, dans lequel l'unité de traitement (120) est mise en oeuvre de sorte que soient remplies les conditions suivantes:

$$L = 1;$$

$$T_{transmit} + T_{decode} < T_{sync};$$

et

$$T_{transmit} + T_{sleep} < T_{sync};$$

où $T_{sleep}$ est un temps de sommeil après l'émission du signal de synchronisation (140), où l'unité de traitement (120) est commandée de sorte que l'unité de traitement (120) ne puisse pas entrer à l'état d'attente (220) pendant un temps de sommeil, où $T_{sync}$ est une période de signal synchronisée qui est un intervalle de temps minimum supérieur à zéro entre deux signaux de synchronisation (140) de deux dispositifs d'émission et réception différents, où $T_{transmit}$ est une longueur de signal de synchronisation qui est un temps pour émettre le signal de synchronisation (140), où $T_{decode}$ est un temps de décodage qui est un temps pris par le récepteur (110) pour décoder le signal de synchronisation (140) et où $L \geq 1$ est un nombre entier positif.

6. Dispositif selon la revendication 5, dans lequel l'unité de traitement (120) est commandée pour ne pas augmenter la phase ($\Phi$) selon la courbe de réponse de phase ($\Delta\Phi$) pendant le temps de sommeil.

7. Dispositif selon l'une quelconque des revendications 1 à 6, dans lequel l'unité de traitement (120) est mise en oeuvre pour utiliser un temps d'écoute $T_{listen}$ qui décrit une durée de l'état d'écoute (210) et qui est déterminé par une période de signal synchronisée $T_{sync}$, qui est un intervalle de temps minimum supérieur à zéro entre deux signaux de synchronisation (140) de deux dispositifs d'émission et de réception différents, un temps de décodage $T_{decode}$, qui est un temps pris par le récepteur (110) pour décoder le signal de synchronisation (140), et un temps de sommeil $T_{sleep}$, qui est un temps après l'émission du signal de synchronisation (140), où l'unité de traitement (120) est commandée de sorte que l'unité de traitement (120) ne puisse pas entrer dans l'état d'attente (220) pendant un temps de sommeil, et dans lequel $T_{listen}$ est supérieur à zéro et inférieur à la période de la fonction de phase.

8. Dispositif selon l'une quelconque des revendications 1 à 7, dans lequel l'unité de traitement (120) est mise en oeuvre pour utiliser un temps d'écoute $T_{listen}$ qui est déterminé par l'équation suivante:

$$T_{listen} \leq T_{sync} + T_{decode} - T_{sleep};$$

où $T_{sync}$ est une période de signal synchronisée qui est un intervalle de temps minimum supérieur à zéro entre deux signaux de synchronisation (140) de deux dispositifs d'émission et de réception différents, où $T_{decode}$ est un temps de décodage, qui est un temps pris par le récepteur (110) pour décoder le signal de synchronisation (140), et où $T_{sleep}$ est un temps de sommeil, qui est un temps après l'émission du signal de synchronisation (140), où l'unité de traitement (120) est commandée de sorte que l'unité de traitement (120) ne puisse pas entrer dans l'état d'attente (220) pendant un temps de sommeil.

9. Dispositif selon l'une quelconque des revendications 1 à 8, lequel l'unité de traitement (120) est mise en oeuvre pour utiliser une longueur de signal de synchronisation $T_{transmit}$ et un temps de sommeil $T_{sleep}$, lorsque $T_{transmit}$ et $T_{sleep}$ dépendent d'une période de signal synchronisée $T_{sync}$ et d'un temps de décodage $T_{decode}$, selon l'équation suivante: $0 < T_{transmit} < T_{sync} - T_{decode}$, où le temps de sommeil $T_{sleep}$ est déterminé par une limite inférieure et une limite supérieure de cette dernière, les deux limites étant fonction de $T_{transmit}$, où la limite supérieure est donnée par $T_{sleep}$ qui est inférieure à $T_{sync} - T_{transmit}$, où la longueur de signal de synchronisation est un temps pour émettre le signal de synchronisation (140), où le temps de sommeil $T_{sleep}$ est un temps après l'émission du signal de synchronisation (140), où l'unité de traitement (120) est commandée de sorte que l'unité de traitement (120) ne puisse pas entrer dans l'état d'attente (220) pendant un temps de sommeil, où la période de signal synchronisée $T_{sync}$ est un intervalle de temps minimum supérieur à zéro entre deux signaux de synchronisation (140) de deux dispositifs d'émission et de réception différents et où le temps de décodage $T_{decode}$ est un temps pris par le récepteur (110) pour décoder le signal de synchronisation (140).

10. Dispositif selon l'une quelconque des revendications 1 à 9, dans lequel l'unité de traitement (120) est mise en oeuvre pour utiliser une longueur de signal de synchronisation $T_{transmit}$ et un temps de sommeil $T_{sleep}$, lorsque $T_{transmit}$ et and $T_{sleep}$ dépendent d'une période de signal synchronisée $T_{sync}$ et d'un temps de décodage $T_{decode}$, selon l'équation suivante: $0 < T_{transmit} < T_{sync} - T_{decode}$, où le temps de sommeil $T_{sleep}$ est déterminé par une limite inférieure et une limite supérieure de cette dernière, les deux limites étant fonction de $T_{transmit}$, où la limite inférieure est supérieure ou égale à un retard de propagation $T_{propagation}$ et la limite supérieure est inférieure ou égale à 80% de la période de signal synchronisée $T_{sync}$, où la longueur de signal de synchronisation $T_{transmit}$ est un temps pour émettre le signal de synchronisation (140), où le temps de sommeil $T_{sleep}$ est un temps après l'émission du signal de synchronisation (140), où l'unité de traitement (120) est commandée de sorte que l'unité de traitement (120) ne puisse pas entrer dans l'état d'attente (220) pendant un temps de sommeil, où la période de signal synchronisée $T_{sync}$ est un intervalle de temps minimum supérieur à zéro entre deux signaux de synchronisation (140) de deux dispositifs d'émission et de réception différents, où le temps de décodage $T_{decode}$ est un temps pris par le récepteur (110) pour décoder le signal de synchronisation (140), et où le retard de propagation $T_{propagation}$ est un temps requis par le signal de synchronisation (140) pour se propager de l'émetteur (130) du deuxième dispositif d'émission et de réception vers le récepteur (110) du premier dispositif d'émission et de réception.

11. Dispositif selon l'une quelconque des revendications 1 à 10, dans lequel l'unité de traitement (120) est mise en oeuvre pour désactiver le récepteur (110) pendant le temps d'attente $T_{wait}$, pour ne pas recevoir de signal de synchronisation (140).

12. Procédé de synchronisation d'un premier dispositif d'émission et de réception avec un deuxième dispositif d'émission et de réception, comprenant les étapes suivantes consistant à:

augmenter une phase ($\Phi$) selon une fonction de phase donnée dans le temps, à l'état d'écoute (210);
recevoir et décoder un signal de synchronisation (140) d'un deuxième dispositif d'émission et de réception et augmenter la phase ($\Phi$) selon une courbe de réponse de phase ($\Delta\Phi$), à l'état d'écoute (210);
comparer la phase ($\Phi$) avec une valeur de seuil ($T_{threshold}$), à l'état d'écoute (210);

**caractérisé par le fait que** le procédé comprend par ailleurs les étapes consistant à:

changer à un état d'attente (220) lorsque la phase ($\Phi$) est égale à la valeur de seuil ($T_{threshold}$):
attendre pendant un temps d'attente, le temps d'attente étant supérieur à zéro et inférieur à une période de la fonction de phase à l'état d'attente (220), où une période de la fonction de phase est la période entre deux signaux de synchronisation (140) du dispositif d'émission et de réception, et changer à un état d'émission (230); et
émettre le signal de synchronisation (140) à l'état d'émission (230).

13. Programme d'ordinateur présentant un code de programme pour réaliser un procédé selon la revendication 12 lorsque le programme est exécuté sur un ordinateur.

14. Dispositif d'émission et de réception, comprenant:

un dispositif de synchronisation d'un premier dispositif d'émission et de réception avec un deuxième dispositif d'émission et de réception selon l'une quelconque des revendications 1 à 11; et
un contrôleur destiné à commander une émission de message et une réception de message sur base d'un timing du signal de synchronisation (140).

140 →  110

150

120

- control
- first function
- second function
- comparison

160

130

140 →

FIG. 1

FIG. 2

FIG. 3

FIG. 4

23

FIG. 5

FIG. 6

FIG. 7

FIG. 8

FIG. 9

Phase

$\phi$threshold

fire    fire    fire

0    T    2T    3T    t

phase function period

FIG. 10

phase of oscillator 1

$\phi$threshold

$\phi_1$

fire    fire    fire    fire

0    t

phase of oscillator 2

$\phi$threshold

fire    fire    fire    fire

$\phi_2$

0

$t_1$  $t_2$    $t_3 t_4$    $t_5$    $t_6 = t_5 + T$    t

FIG. 11

FIG. 12

FIG. 13a

FIG. 13b

EP 1 744 472 B1

FIG. 13c

EP 1 744 472 B1

Sleeping
is over

$\phi = \phi_{threshold}$

Transmitting
is over

( 1 ) ——————→ ( 2 ) ——————→ ( 3 )

LISTENING          TRANSMITTING          SLEEPING

# FIG. 14

Phase

$T_{sleep}$          fire          fire

$\phi_{threshold}$

0 ————————————————————————→ t

$T_{sleep}$

$T_{listen}$   $T_{transmit}$

T          T

phase functionperiod

# FIG. 15

FIG. 16

FIG. 17

FIG. 18

FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Coupled oscillators and biological synchronization. **S. H. Strogatz ; I. Stewart.** Scientific American. December 1993, vol. 269, 68-74
- **S. H. Strogatz.** Spontaneous synchronization in nature. *IEEE International Frequency Control Symposium,* 1997
- **M. L. X. Guardiola ; A. Diaz-Guilera ; C. J. Perez.** Synchronization, diversity, and topology of networks of integrate and fire oscillators. *Phys. Rev. E,* April 2000, vol. 62, 5565-5570
- **Mirollo ; Strogatz.** Synchronization of pulse-coupled biological oscillators. *SIAM J. APPL. MATH,* December 1990, vol. 50, 1645-1662
- **Y.-W. Hong ; A. Scaglione.** Time synchronization and reach-back communications with pulse-coupled oscillators for UWB [Ultra Wideband] wireless ad hoc networks. *IEEE Conference on Ultra Wideband Systems and Technologies 2003,* November 2003, 190-194